# EUROPEAN PATENT SPECIFICATION

(11) **EP 1 727 015 B1**
(45) Date of publication and mention of the grant of the patent: **29.04.2009**
(21) Application number: 05011150.9
(22) Date of filing: 23.05.2005
(51) Int. Cl.: G05F 1/571, B60R 16/02

(54) **Voltage stabilizing and surge preventing vehicle grounding system**
KFZ-Erdungssystem mit Spannungsstabilisierungs- und Überspannungsschutzschaltung
Circuit de stabilisation de tension et de protection contre les surtensions dans un circuit de mise à terre dans un véhicule

(43) Date of publication of application: 29.11.2006
(73) Proprietor: Su, Chih-Yang, Tainan County 731 (TW)
(72) Inventor: Su, Chih-Yang, Tainan County 731 (TW)
(74) Representative: Viering, Jentschura & Partner

(56) References cited:
- EP-A- 1 359 033
- WO-A-01/32479
- US-A- 3 098 966
- US-A- 4 841 259
- US-A- 5 304 849
- US-B1- 6 366 439
- US-B1- 6 498 710

## Description

The present invention relates to voltage stabilizing and surge preventing vehicle loop grounding system, and more particularly, to a grounding system on which the essential components of the vehicle whose negative terminals being connected are protected from possible attack of electric surge and pulsating voltage of a generator by appropriate surge absorbing means, and the generator voltage is stabilized by effective grounding system.

EP 1 359 033 A1 discloses an air conditioner with a direct current (DC) power supply, a compressor, and a compressor driving device that converts a current supplied from the DC power supply into an alternate-current (AC) for driving the compressor. The DC power supply energizes the driving device through a center conductor and an outer conductor of a shield cable. This structure allows the driving device not to include a capacitor for smoothing a power current and to suppress surge voltages and electromagnetic-wave radiation.

US 6,498,710 B1 discloses a passive electronic component architecture employed in conduction with various dielectric and combinations of dielectric materials to provide one or more differential and common mode filters for the suppression of electromagnetic emissions and surge protection.

US 6,366,439 discloses a surge absorber without chips in which a pair of discharge electrodes arranged for facing to each other in a housing are fixed by welding of the housing with a distance between the discharged electrodes maintained. Clean and dry air or a mixed gas mainly comprising air is sealed in an air chamber. When a surge voltage is applied between the electrodes, the surge energy is absorbed due to the dielectric breakdown that occurs in the air chamber and the conversion of electrical energy into light energy.

In keeping pace with the progress of automobile manufacturing technology, a lot of electronic products have been equipped in the automobile in order to improve its performance. As the electronic component is liable to yielding to the environmental conditions such as high ambient temperature and moisture resulting in varying its impedance and unabling to keep its signal level even generate multi functional signal or damage the connected electronic components.

The steel chassis of the automobile is to be used as the passage of grounding current. However its impedance will very following the change of temperature and time of service. This might cause variation of the input signal level to the automobile computer (ECU) from the sensor. Consequently, ECU may possibly send a malfunctional or an untimely signal to the control device thereby causing improper operation of the vehicle.

A malfunctional signal or an untimely signal may lead to incomplete combustion of the engine owning to improper density of the vaporized fuel and produce pollutant exhausted gas. A surge current and pulsating voltage produce by the automobile generator will cause vibration and noise of D.C motors installed in the vehicle such as the fan motor and the refrigerator compressor. In the worst case, damage other electronic devices or radiate excessive electromagnetic wave.

Conventional energy saving means provided in the vehicle utilizes several sections of a specific magnetic wire to interconnect the nodes on the negative side return conductor so as to reduce the impedance of the electrical circuit. However, the electrical circuit of a vehicle so constructed has several noteworthy shortcomings that 1. A battery unit is charged by the generator when the vehicle is moving, the grounding current is supplied from the negative side of the generator and not from the negative pole of the battery unit 2. A magnet wire used as a negative conductor may reduce the impedance of the circuit but at the same time, intensify the surge produced by the generator that greatly threats the insulation of other electronic devices provided in the vehicle such as the air flow sensor of the vehicle computer. 3. A lagging signal current carried in the magnet wire affects the coordinative action among the component devices in the vehicle electrical system, such as ignition timing, nozzle jet velocity etc., and lowers overall efficiency of the vehicle.

For these defects noticeable on the prior art, an improvement is seriously required.

The inventor has plunged into this matter for years to studying and improving these defects and come up with this invention, which is able to eliminate the defects mentioned above.

The main object of the present invention is to provide a vehicle loop grounding system capable of promoting vehicle efficiency and prolonging its lifetime by coordinating the action among the component devices in the vehicle electrical system by precisely adjusting the ignition time to obtain complete fuel combustion, sawing fuel consumption, increasing output power, and minimizing pollutant exhaust gas.

Another object of the present invention is to provide a vehicle loop grounding system capable of stabilizing the generator voltage to reduce vibration and noise by forming an effective grounding system.

Another object of the present invention is to provide a vehicle loop grounding system capable of absorbing surge wave to protect the security of various electronic component devices and avoid radiation of excessive electromagnetic waves.

Another object of the present invention is to provide a vehicle loop grounding system capable of minimizing the impedance of the electrical circuit to assure prompt reaction of the safety bladder and intensity the brightness of the vehicle lights.

To achieve the above objects, a vehicle loop grounding system is provided comprising the features disclosed in claim 1.

Further embodiments of the invention are disclosed in the dependent claims.

A vehicle loop grounding system is laid in the engine chamber, and is interconnecting a negative terminals of the generator, a gear shift controller, a engine cover, a battery unit, a starting motor, a anti stick brake motor, a vehicle computer, a throttle valve controller, a dash board, a compressor, a relay assembly, to a grounding terminal of a chassis so as to form a closed loop wire.

The devices provided with this closed loop grounding wire include: A surge absorber having an accommodation cavity enclosed by a housing which is formed of two sections, an electrical circuit board contained inside has a positive and a negative conductor emerged out of the housing to form a circuit with a resistor, a fuse element, an indication lamp, and a plurality of capacitors. A surge suppresser having an accommodation cavity enclosed by an environment protective heat resistive plastic housing, the accommodation cavity is filled with an insulated environmental protective materials, and a plurality of successively arrayed annular magnetic hollow cores with an insulation electrical conductor wound around and passing through the channel formed by the hollow cores to extend out of the two ends of the surge suppresser thereby forming a first and a second conductors so as to be connected with the positive terminal of the surge absorber and the positive terminal of the compressor respectively.

The loop grounding wire is provided with nine nodes which being connected to the grounding points on the engine cover and the corresponding negative terminals of the component devices with one or more than one conductor.

### BRIEF DESCRIPTION OF THE DRAWINGS

The drawings disclose an illustrative embodiment of the present invention, which serves to exemplify the various advantages and objects hereof, and are as follows:
Fig.1 is a cross sectional view of a surge absorber of the present invention ;
Fig.2 is the wiring diagram of the surge absorber showing in Fig. 1 ;
Fig.3 is a cross sectional view of a surge suppresser of the present invention ;
Fig.4 is a schematic view of a grounding conductor used in the present invention ;
Fig. 5 is a wiring diagram of a vehicle loop grounding system according to the present invention ;
Fig. 6 to Fig. 8 show respectively the perspective views of the surge absorber, the surge suppresser, and the grounding conductor used in the present invention.

Attachment 1 is a list enumerating the grounding resistances measured between the negative terminal of the generator and the negative terminals of various component devices with/without installing the loop grounding wire when vehicle engine stands still and the battery unit is disconnected. It is clear that the grounding resistances in every part are lowered when installing the loop grounding wire of the present invention.

Attachment 2 is a list enumerating the voltage wave form expressed in parameter words measured between the generator positive terminal and the negative terminals of various component devices with/without installing the loop grounding wire when vehicle engine is making no load running at idle speed and 2000 rpm.

Attachment 3 to 11 are oscilloscopic graphs of voltage wave forms taken respectively between the generator positive terminal and the negative terminals of the generator, the battery, the starting motor, the throttle valve, the gear shift controller, the compressor, the ABS, the engine cover, the chassis with/without installing the loop grounding wire when engine is making no load running at idle speed and 200rpm.

Attachment 12 is a list enumerating the voltage wave form expressed in parameter words measured between the generator positive terminal and the negative terminals of various component devices with/without installing the loop grounding wire when vehicle engine is making full load running at idle speed and 2000rpm.

Attachments 13 to 21 are oscilloscopic graphs of voltage wave forms taken respectively between the generator positive terminal and the negative terminals of the generator, the battery, the starting motor, the throttle valve, the gear shift controller, the compressor, the ABS, the engine cover, the chassis with/without installing the loop grounding wire when engine is making full load running at idle speed and 200rpm.

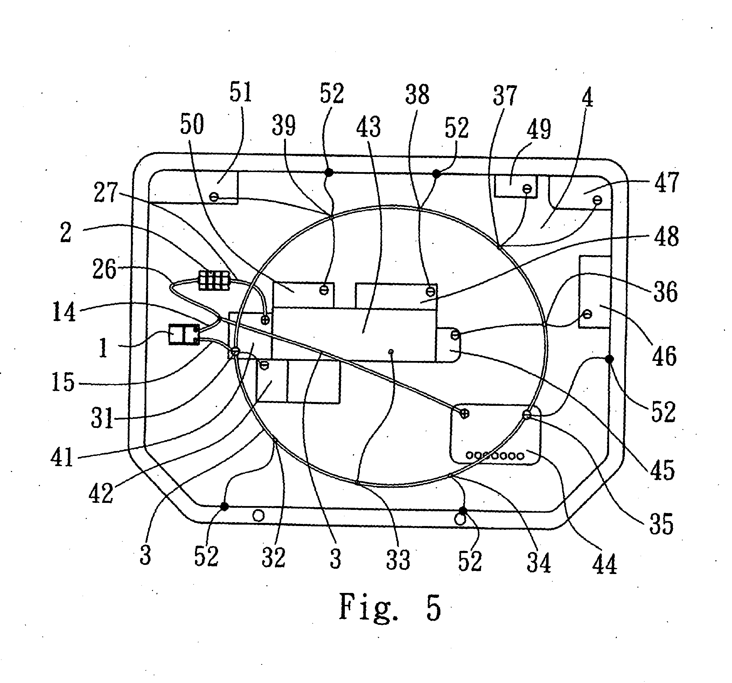

Referring to Fig. 5, the wiring system of the present invention is laid in the vehicle engine chamber 4 so as not to affect the structural strength of the vehicle. The wire interconnects the negative terminal of a generator 41, the grounding terminal of a gear shift controller 42, an engine cover 43, the negative pole of a battery unit 44, the negative terminal of a starting motor 45, the negative terminal of ABS 46, the negative terminal of a vehicle computer 47, the negative terminal of a throttle valve 48, the grounding terminal of a dash board 49, the negative terminal of a compressor 50, the negative terminal of a relay assembly 51, and the grounding terminal of a chassis 52 so as to form a closed loop grounding wire. The functional devices joined to this loop are a surge absorber 1 and a surge suppresser 2, and a plurality of nodes are provided on the way of the loop wire in order to connect the aforementioned terminals with the loop wire. The positive conductor 14 of the surge absorber 1, a first conductor 26 of the surge suppresser 2 and the connector 3 connected to the positive pole of the battery unit 44 are connected together. A negative conductor 15 of the surge absorber 1 is connected to the negative terminal of the generator 41, while a second conductor 27 of the surge suppresser 2 is connected to the positive terminal of the generator 41.

By so, the closed loop grounding system is divided by nodes en route into several wiring sections. The first side goes counter clockwise beginning from a first node 31 which interconnects the negative terminal of generator 41 and the grounding terminal of gear shift controller 42, a second node 32 to which a first grounding terminal 52 of the chassis is connected, a third node 33 to which the grounding terminal 43 of the engine caver is connected, and ending at a fourth node 34 to which a second grounding terminal 52 of the chassis is connected.

The second side goes counter clockwise beginning from a fifth node 35 which interconnects the negative pole of the battery unit 44 and a third grounding terminal of the chassis, a sixth node 36 to which both the negative terminals of ABS 46 and the starting motor 45 are connected, a seventh node 37 to which the negative terminals of the vehicle computer 47 and the grounding terminal of the dash board 49 are connected, a eighth node 38 to which the grounding terminal of the throttle valve 48 and a fourth grounding terminal 52 of the chassis are connected, and ending at a ninth node 39 to which the grounding terminal of the compressor 50 and a fifth grounding terminal 52 of the chassis are connected.

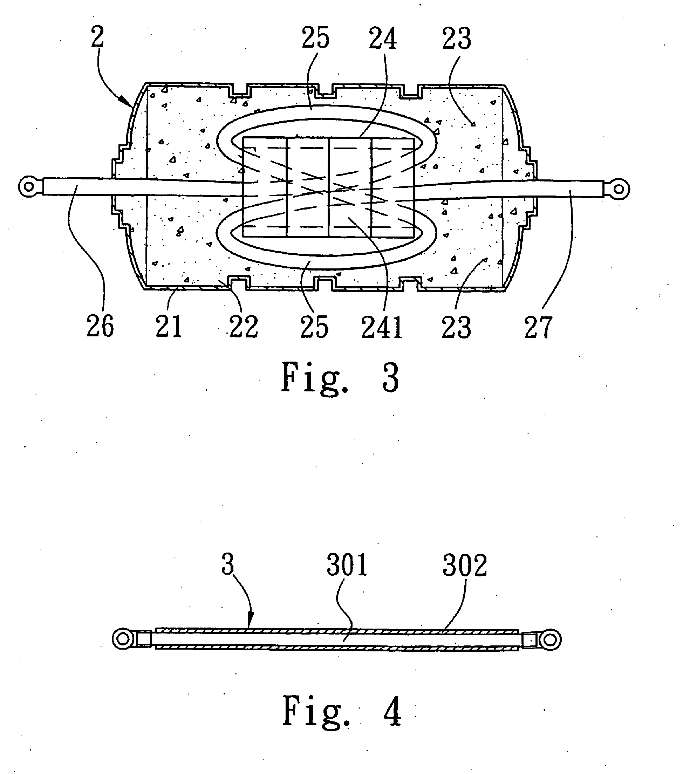

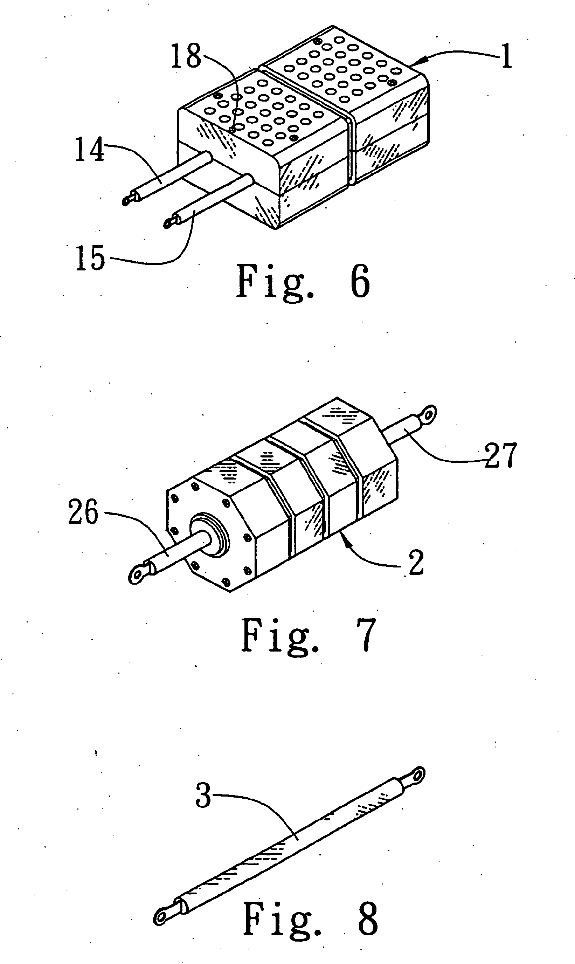

Referring to Fig. 4 and 8, which show respectively the schematic and perspective views of the conductor used to construct the loop grounding system of the present invention. The conductor is formed of a high electric conductive core 301 sheathed with an insulation material 302.

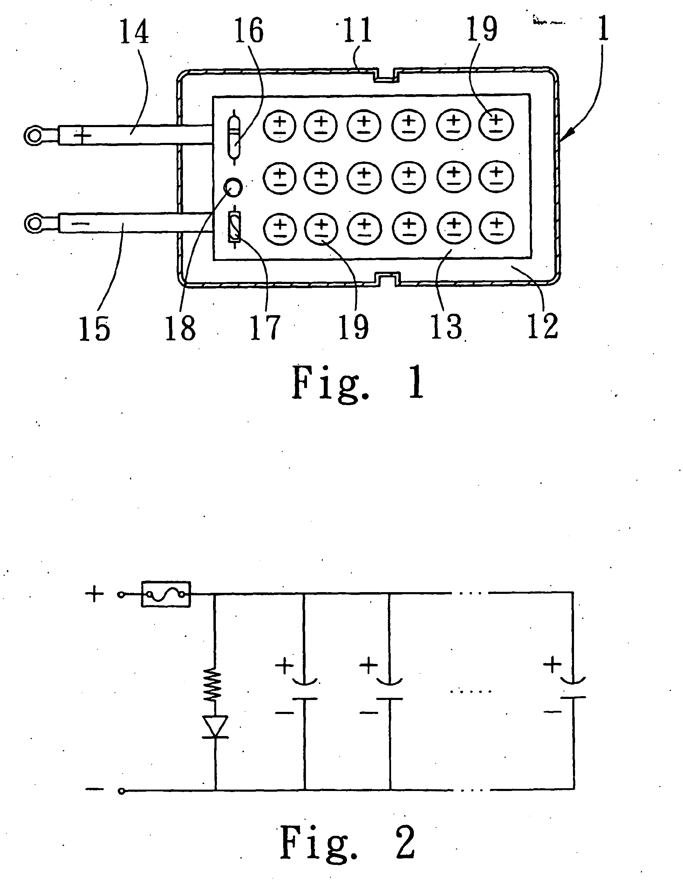

Referring to Fig. 1 and 6, which show respectively the cross sectional and the perspective views of the surge absorber 1. The essential components of the surge absorber 1 are a resistor 16, a fuse element 17, an indication lamp18, and a plurality of capacitor 19 disposed on an electrical circuit board 13 which is accommodated in an inner cavity 23. The inner cavity 12 is enclosed by a housing 11 composed of two sub-housings. Two lead wires 14 and 15 are extended out of the housing 11 from same side, and are respectively connected to the positive and negative terminals of the surge absorber 1. The resistor 16 is used to control the voltage and current of the indication lamp 18, and the fuse element 17 is for overcurrent protection of the surge absorber 1 and other components as well. The indication lamp 18 indicates whether the surge absorber 1 is energized. The wiring diagram of the surge absorber is shown in Fig. 2.

Fig. 3 and 7 show respectively the cross sectional and the perspective views of surge suppresser 2. it is essentially a hollow annular magnetic core 24 formed of several successively arrayed sub-cores in an inner cavity 22 of an environmental protective heat resistive plastic housing 21, and an insulated electric conductor 25 coiling around the annular magnetic core 24 and passing the central passage 241 formed by the hollow portion of the magnetic core 24, is extended out of the surge suppresser 2 from both sides of the housing 21 respectively with a first and a second lead wires 26 and 27. Besides, the inner cavity 22 in the housing 21 is filled with an insulated environmental protective material 23. the surge suppresser 2 serves to suppress the surge current produced by the generator 41 so as to protect the other component devices form possible damage and minimize the intensity of harmful electromagnetic wave.

For laying out the loop grounding wire shown in Fig. 5, the fallowing steps are followed:
(A) connecting the negative terminal of the surge absorber 1 to the negative terminal of the generator 41 with its negative conductor 15;
(B) connecting the second conductor 27 of the surge suppresser 2 to the positive terminal of the generator 41;
(C) connecting the positive conductor 15 of the surge absorber 1, the first conductor 26 of the surge suppresser 2, and the conductor 3 from the positive pole of the battery unit 44 together;
(D) using two conductors 3, each from one side to connect the negative terminal of the generator 41 and the negative pole of the battery unit 44, so as to form a closed loop grounding wire;
(E) connecting the negative terminal of the gear shift controller 42 to the first node 31 of the loop grounding wire using at least one conductor 3;
(F) connecting all of the nodes to the corresponding grounding terminals 52 with conductors 3;
(G) connecting the grounding terminal of the engine cover 43 to the third node 33 of the loop grounding wire using at least one conductor 3;
(H) connecting the negative terminal of ABS 46 to the sixth node 36 of the loop grounding wire using at least one conductor 3;
(I) connecting the negative terminal of the starting motor 45 to the sixth node 36 of the loop grounding wire using at least one conductor 3;
(J) connecting the negative terminal of the vehicle computer 47 to the seventh node 37 of the loop grounding wire using at least one conductor 3;
(K) connecting the common grounding terminal of the dash board 49 to the seventh node 37 of the loop grounding wire using at least one conductor 3;
(L) connecting the negative terminal of the throttle valve 48 to the eighth node 38 of the loop grounding wire using at least one conductor 3;
(M) connecting the negative terminal of the compressor 50 to the ninth node 39 of the loop grounding wire using at least one conductor 3;
(N) connecting the negative terminal of the relay assembly 51 to the ninth node 39 of the loop grounding wire; and
(O) completing a multi-tapped loop grounding system.

In all, it emerges from the above description that the voltage stabilizing and surge preventing vehicle grounding system provided by the invention has several noteworthy features which serve to palliate the shortcomings of the vehicle grounding system system provided according to the prior art, namely:
(1) A reliable grounding contribute to lowering the grounding resistance of the mechanical components and stabilizing the output voltage of the vehicle generator that leads to helping engine have a timely ignition thereby making perfect combustion of fuel, increasing engines power output, saving fuel consumption, and clearing the pollutant exhaust gas.
(2) Alleviates, the vehicle vibration and diminishes the mechanical noise.
(3) Installation of surge absorber and surge suppresser protects the mechanical components from being damaged by impulse voltage.
(4) An excess radiation of the electromagnetic wave from the vehicle generator is prevented.
(5) Other advantages such as effective function of ABS, improved vehicle illumination, enhanced response of the security bladder.

Many changes and modifications in the above described embodiment of the invention can , of course, be carried out without departing from the scope thereof. Accordingly, to promote the progress in science and the useful arts, the invention is disclosed and is intended to be limited only by the scope of the appended claims.

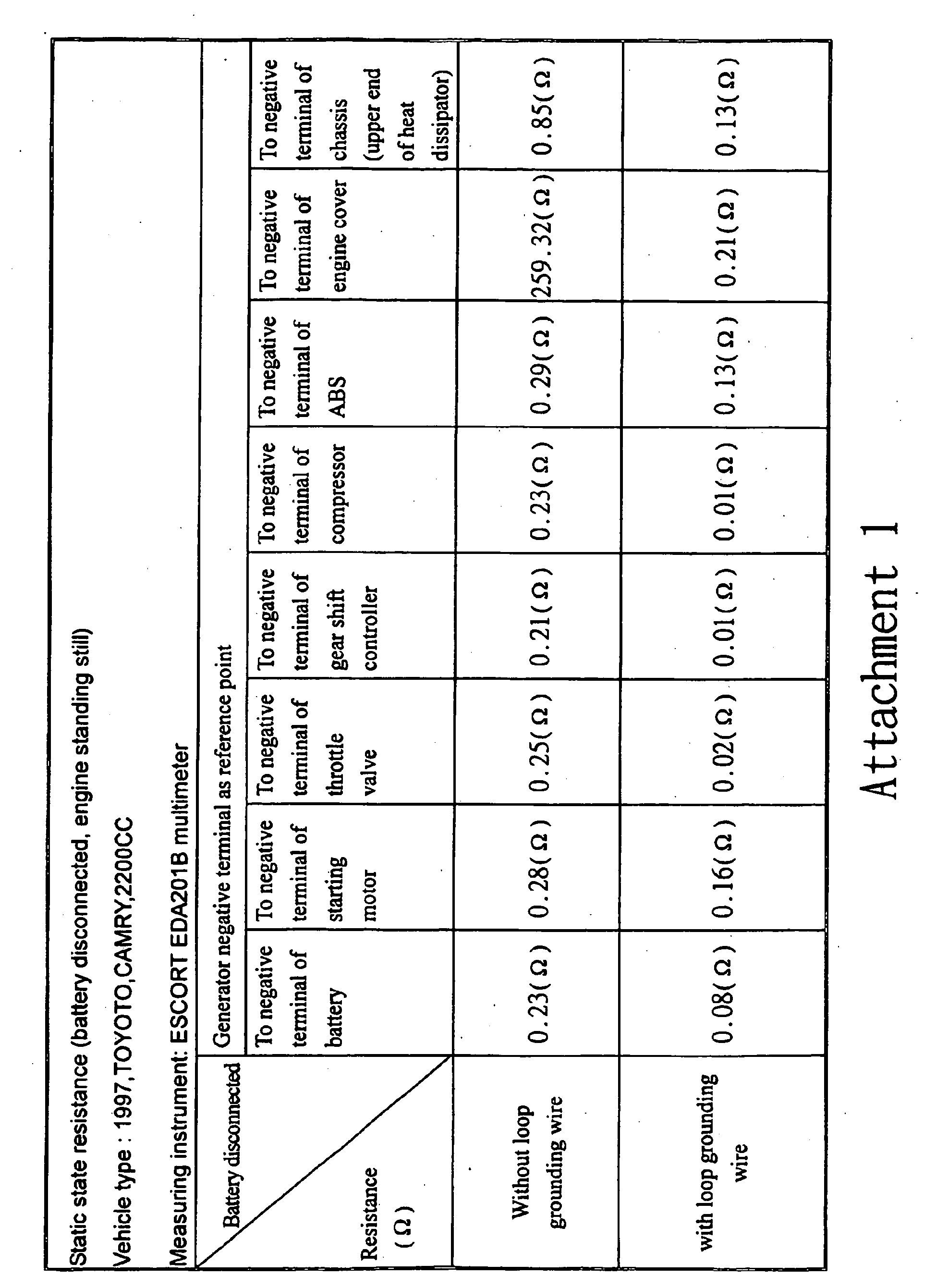

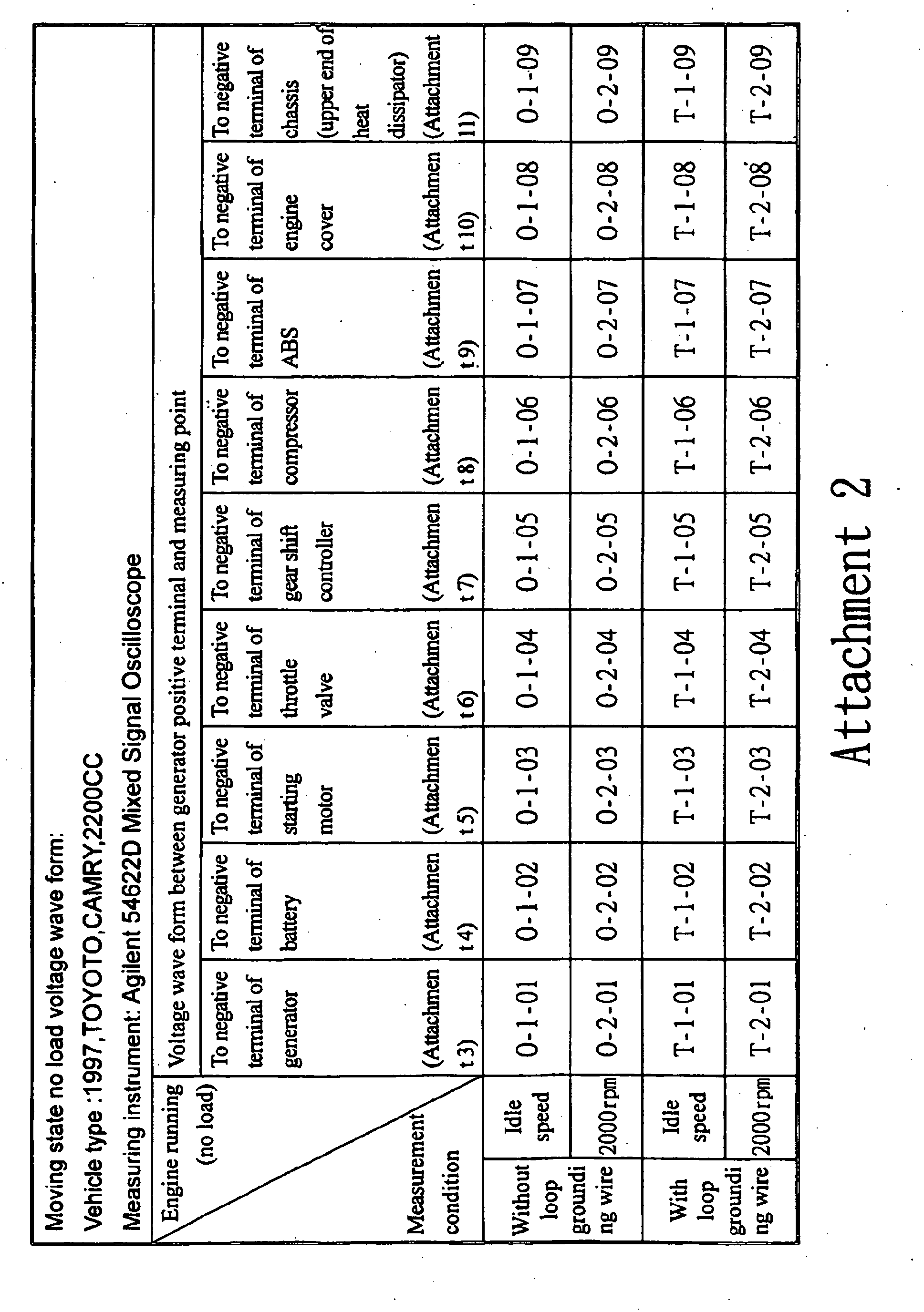

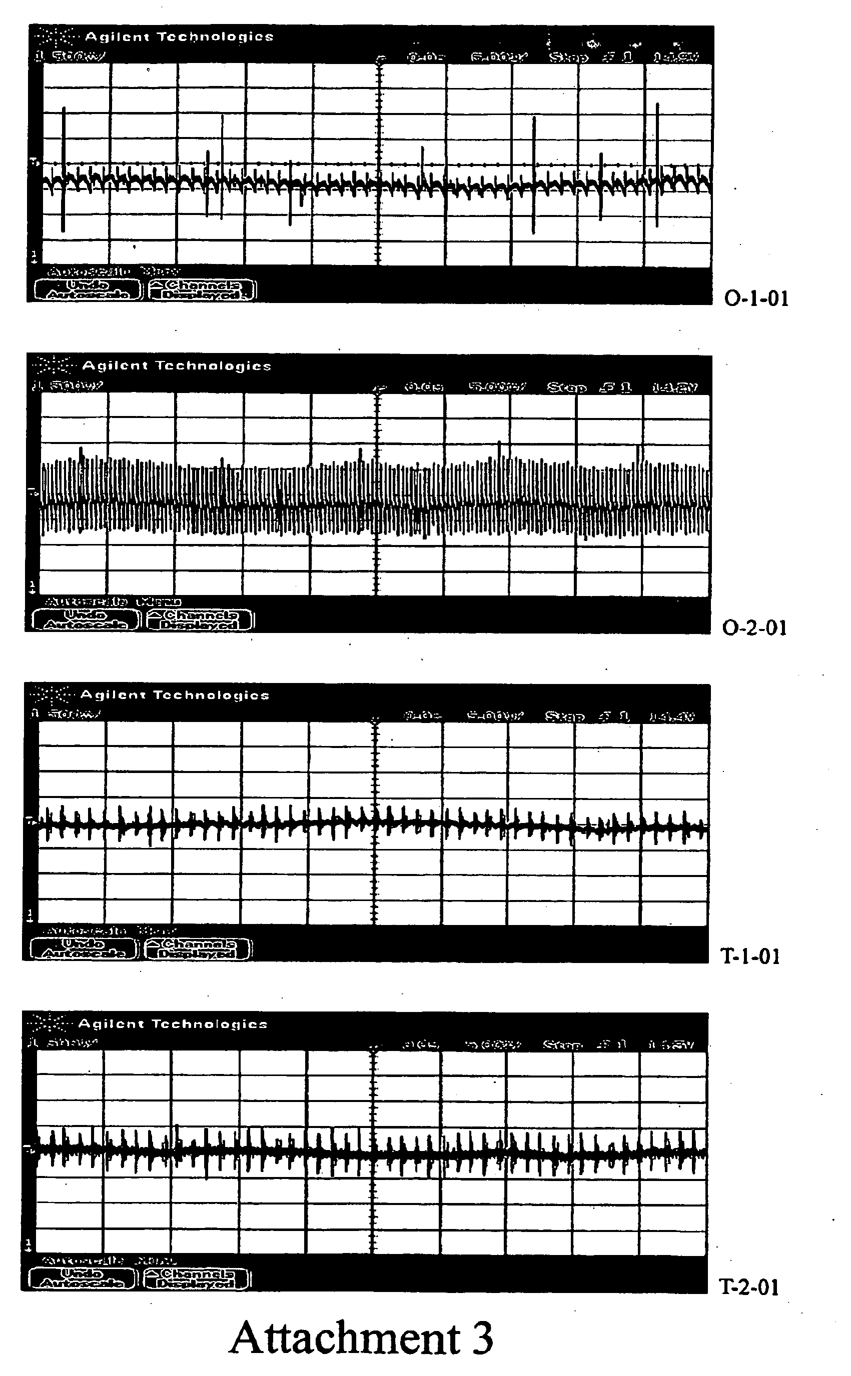

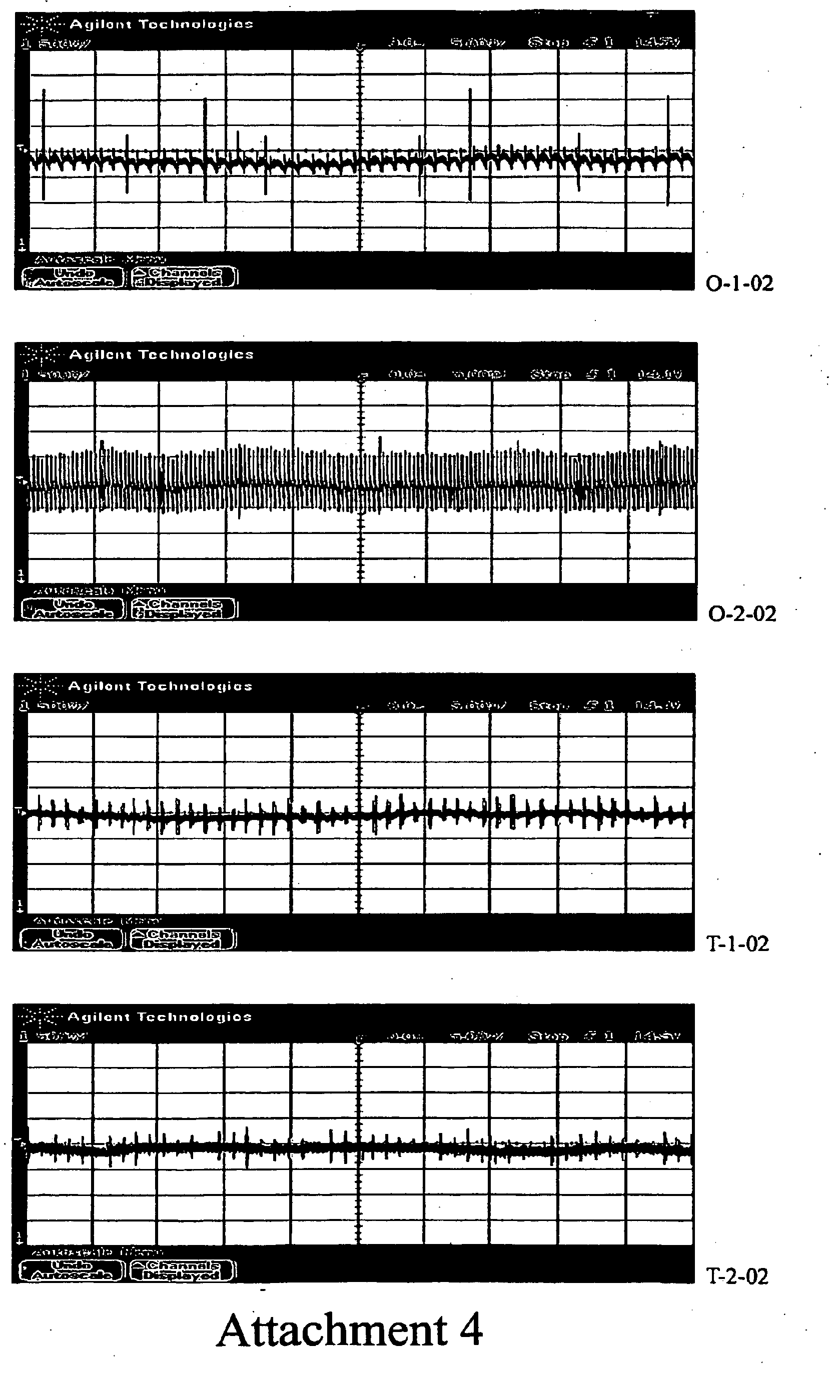

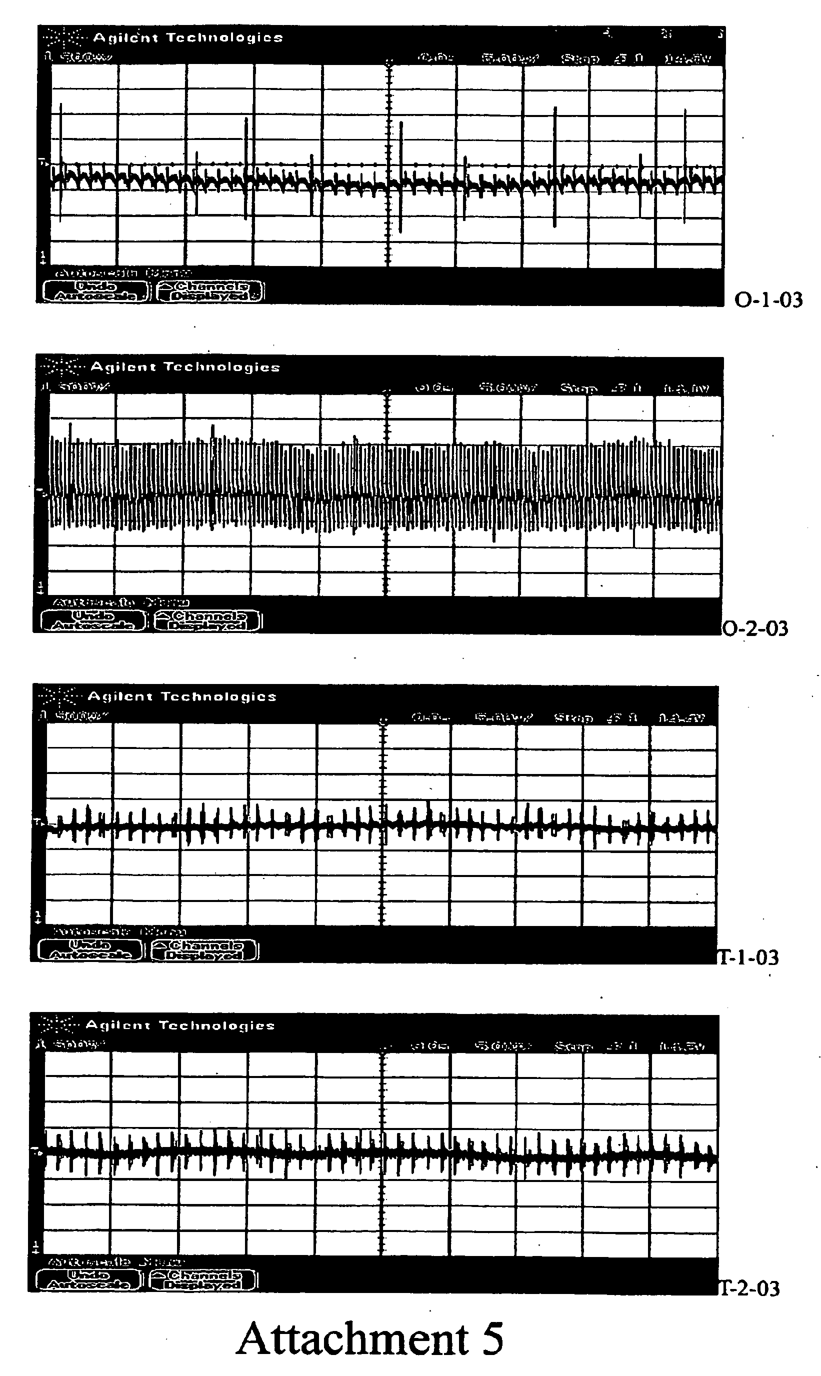

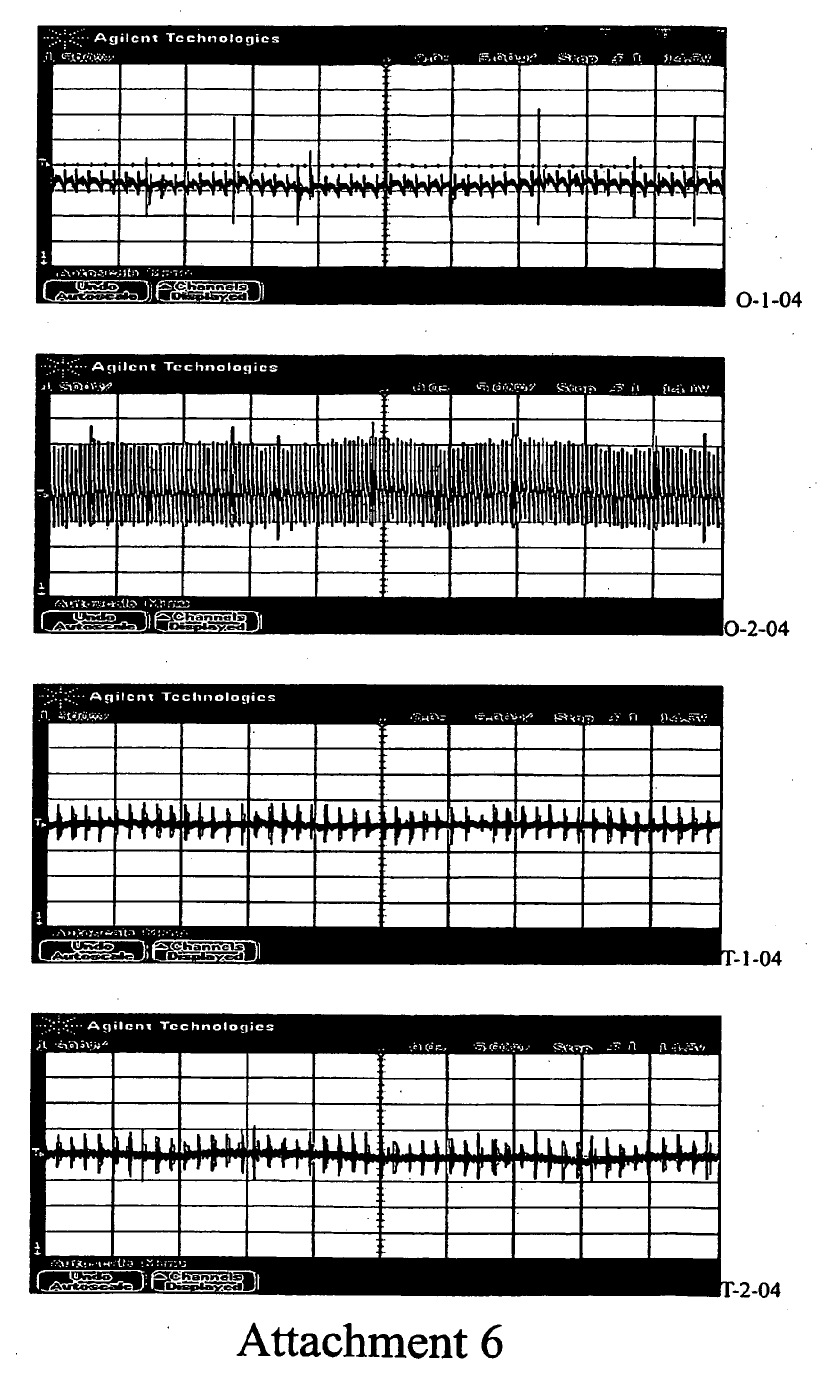

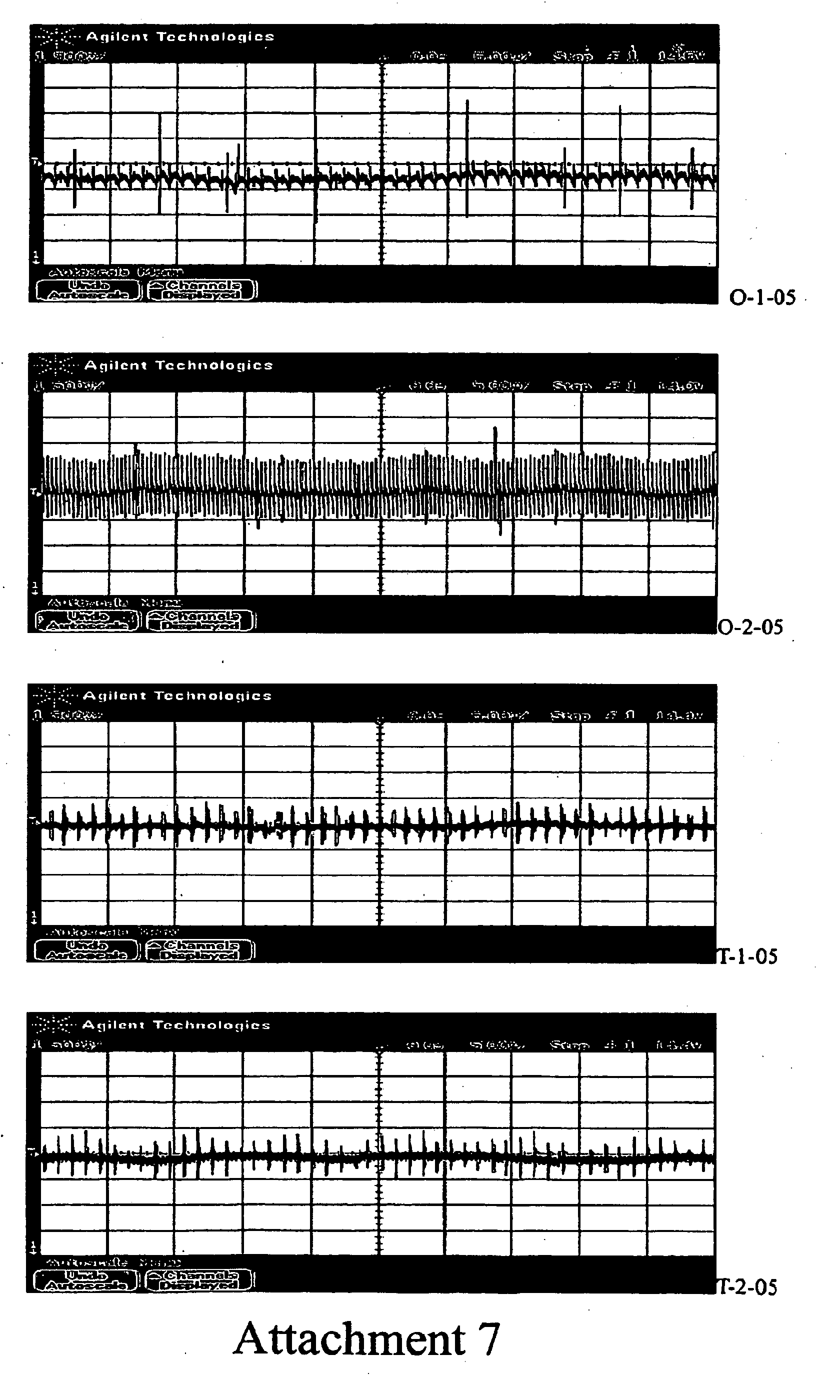

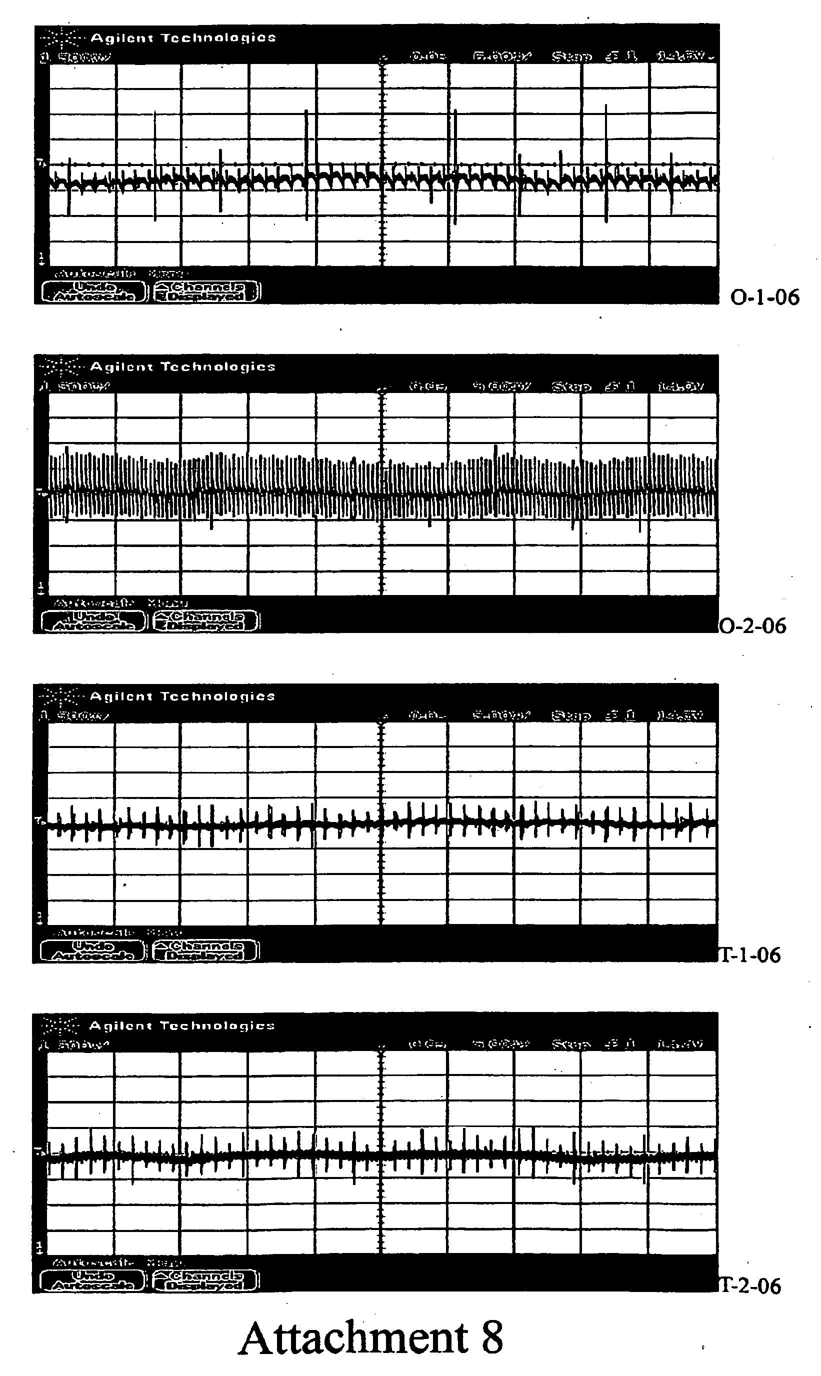

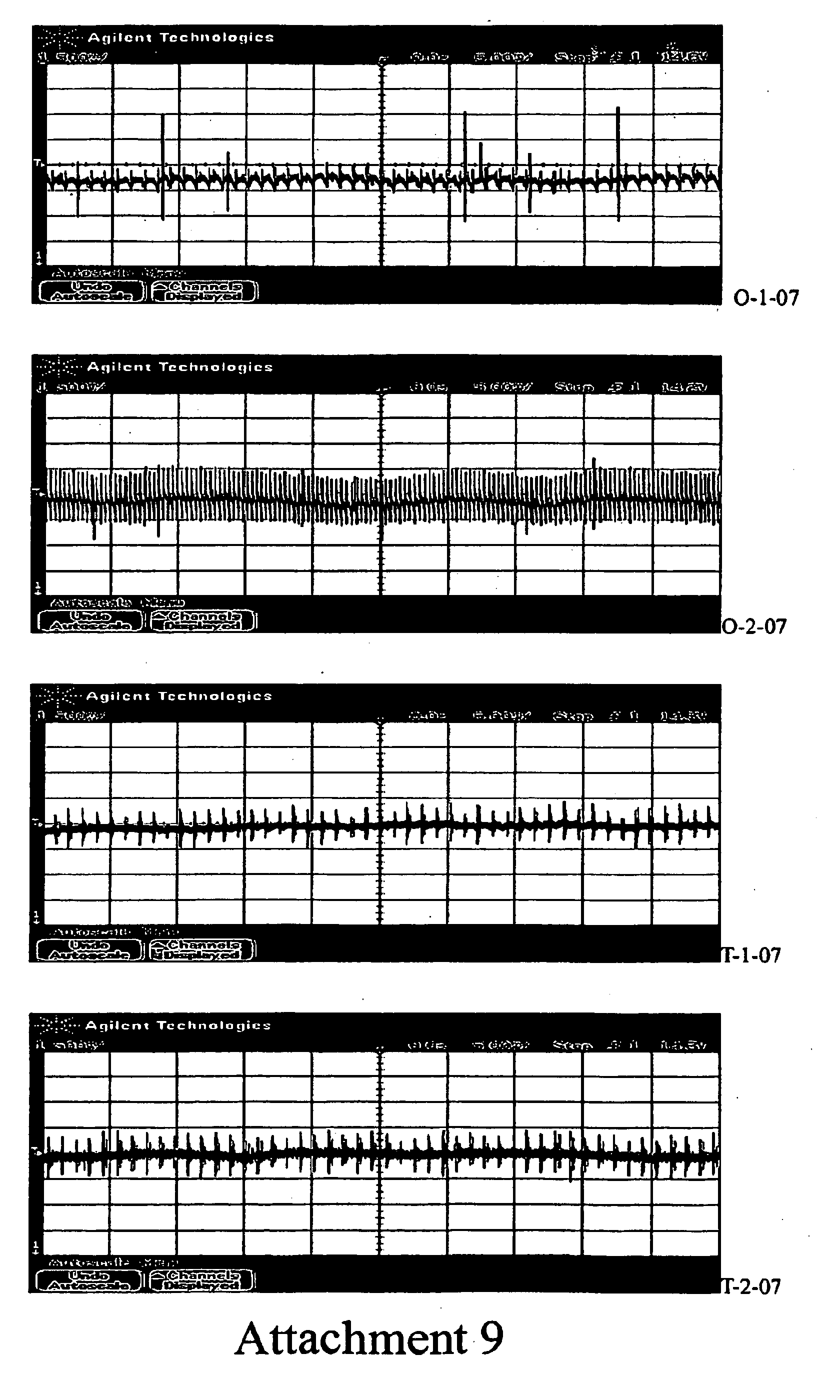

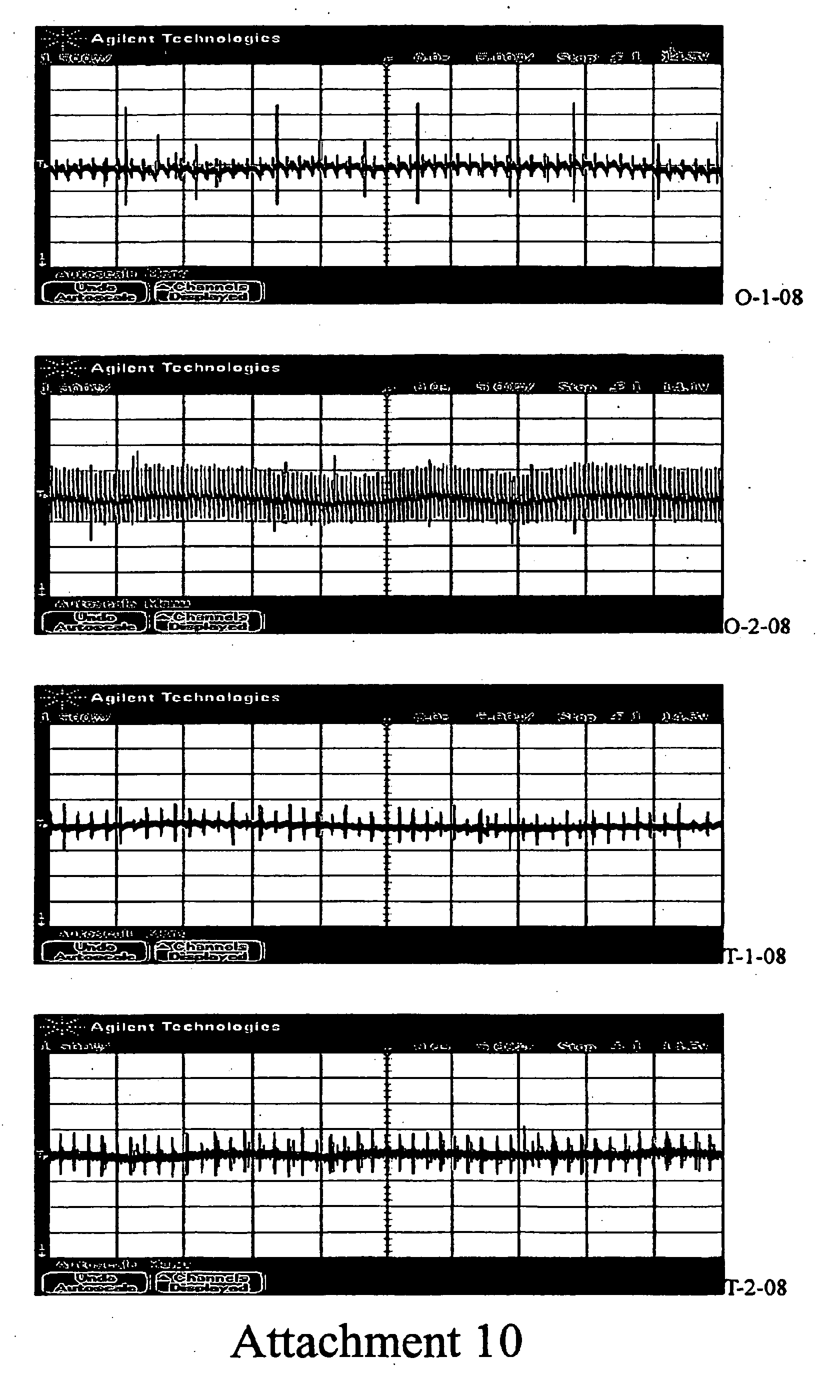

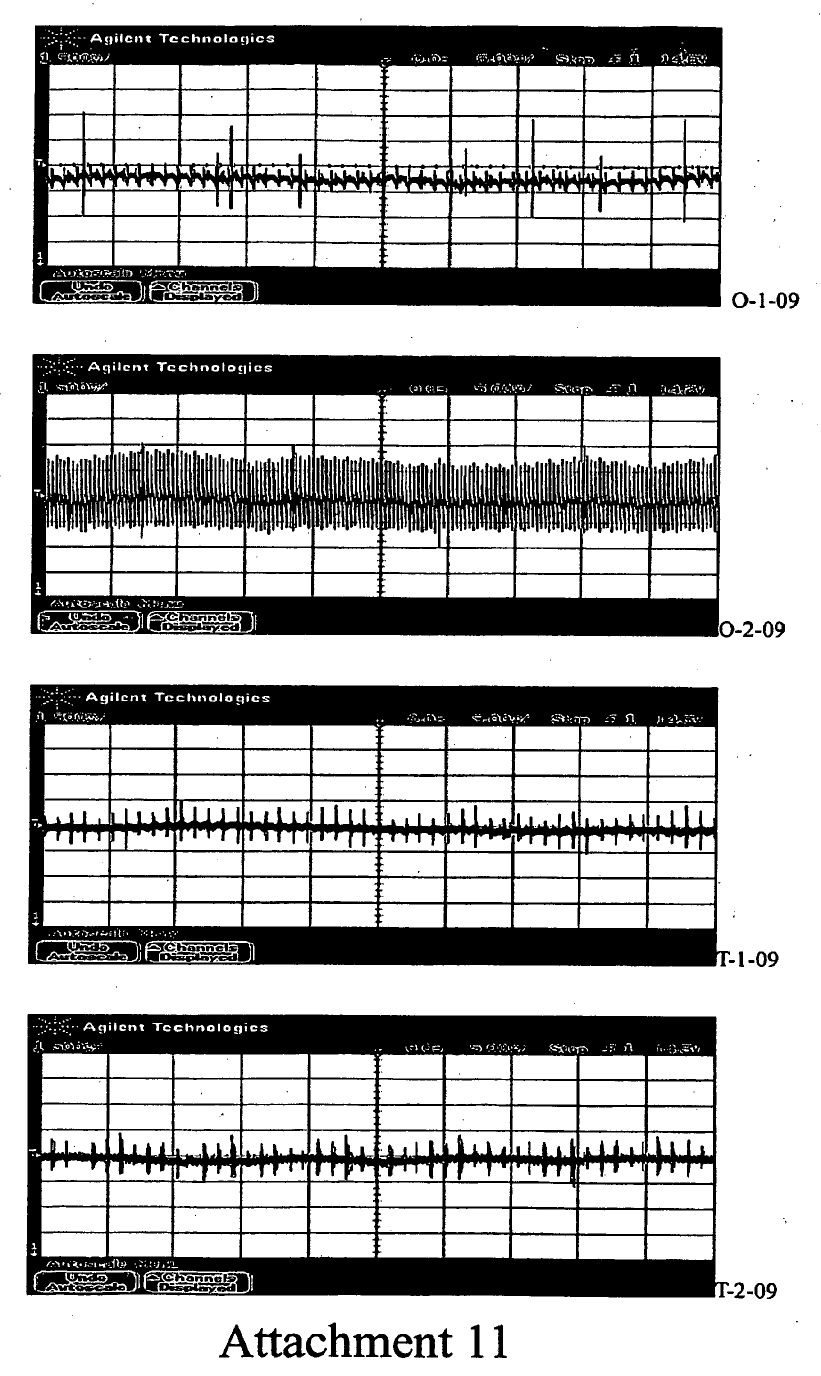

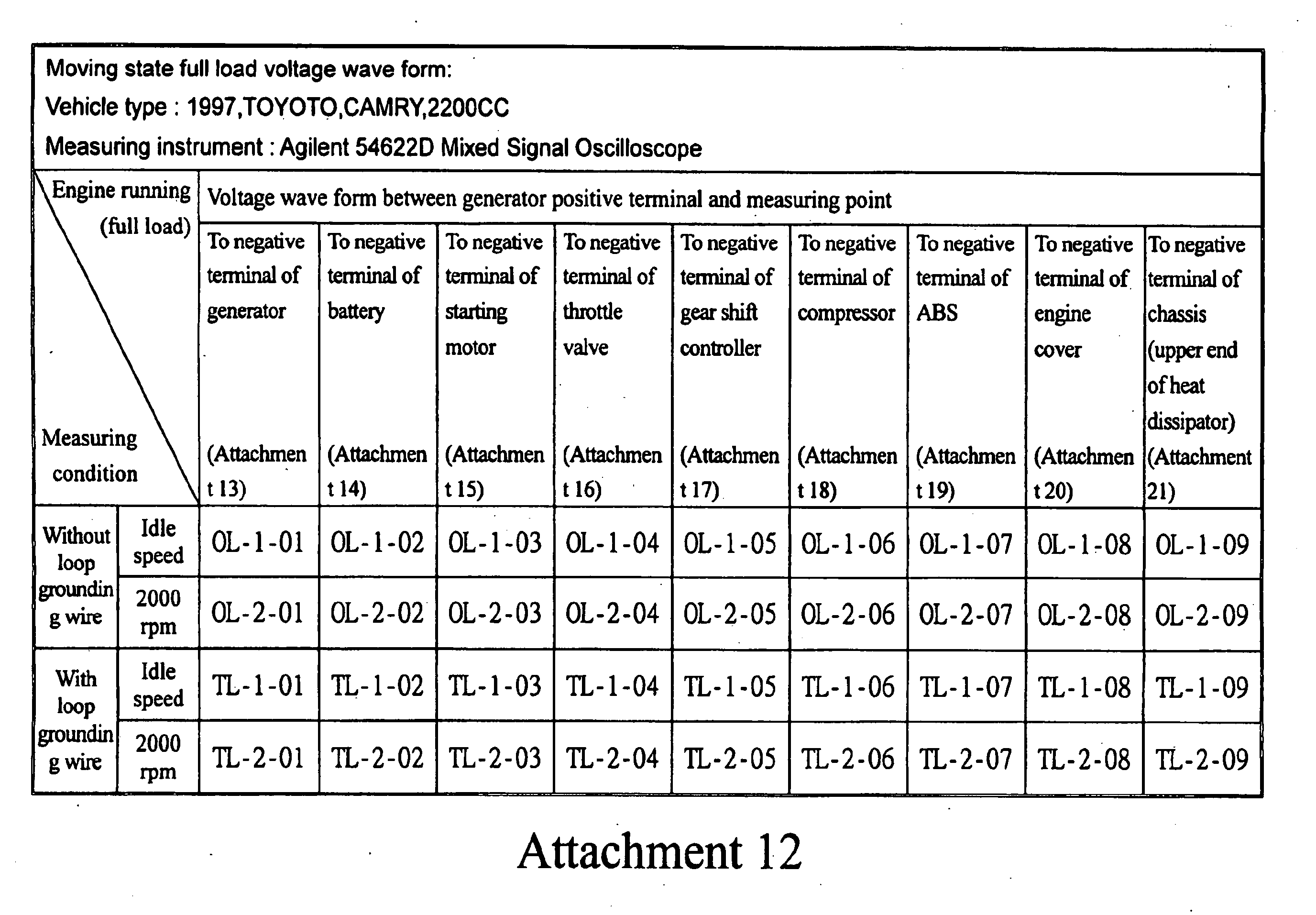

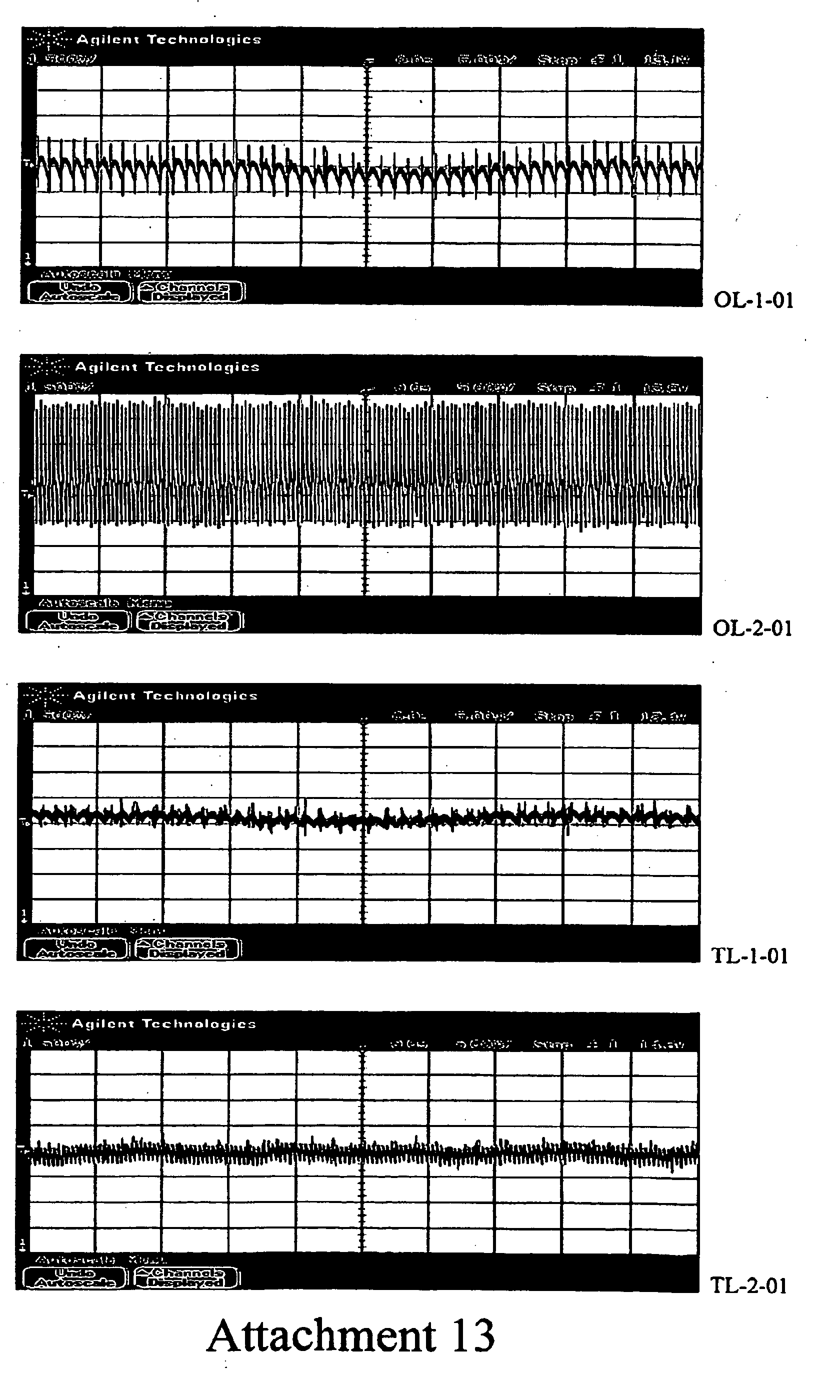

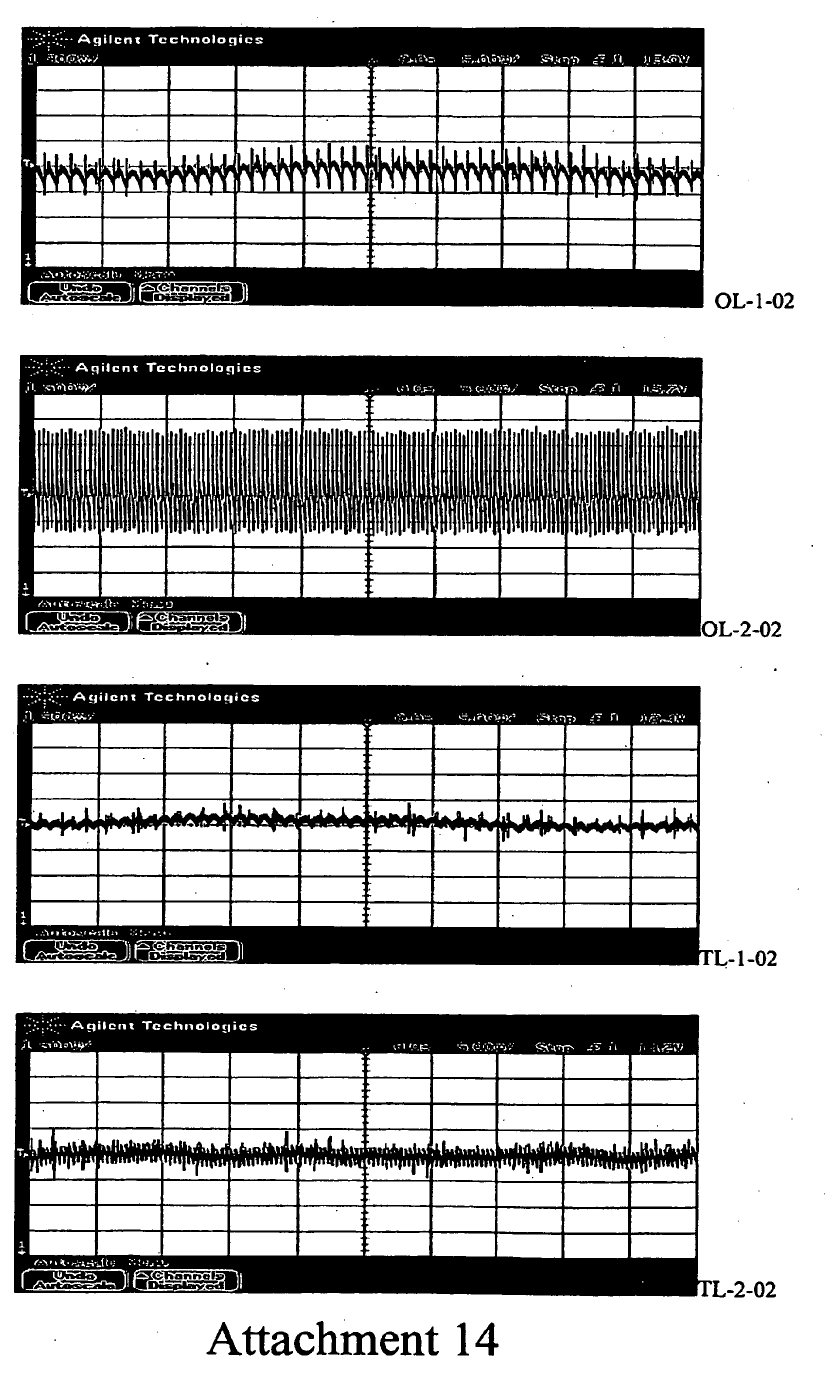

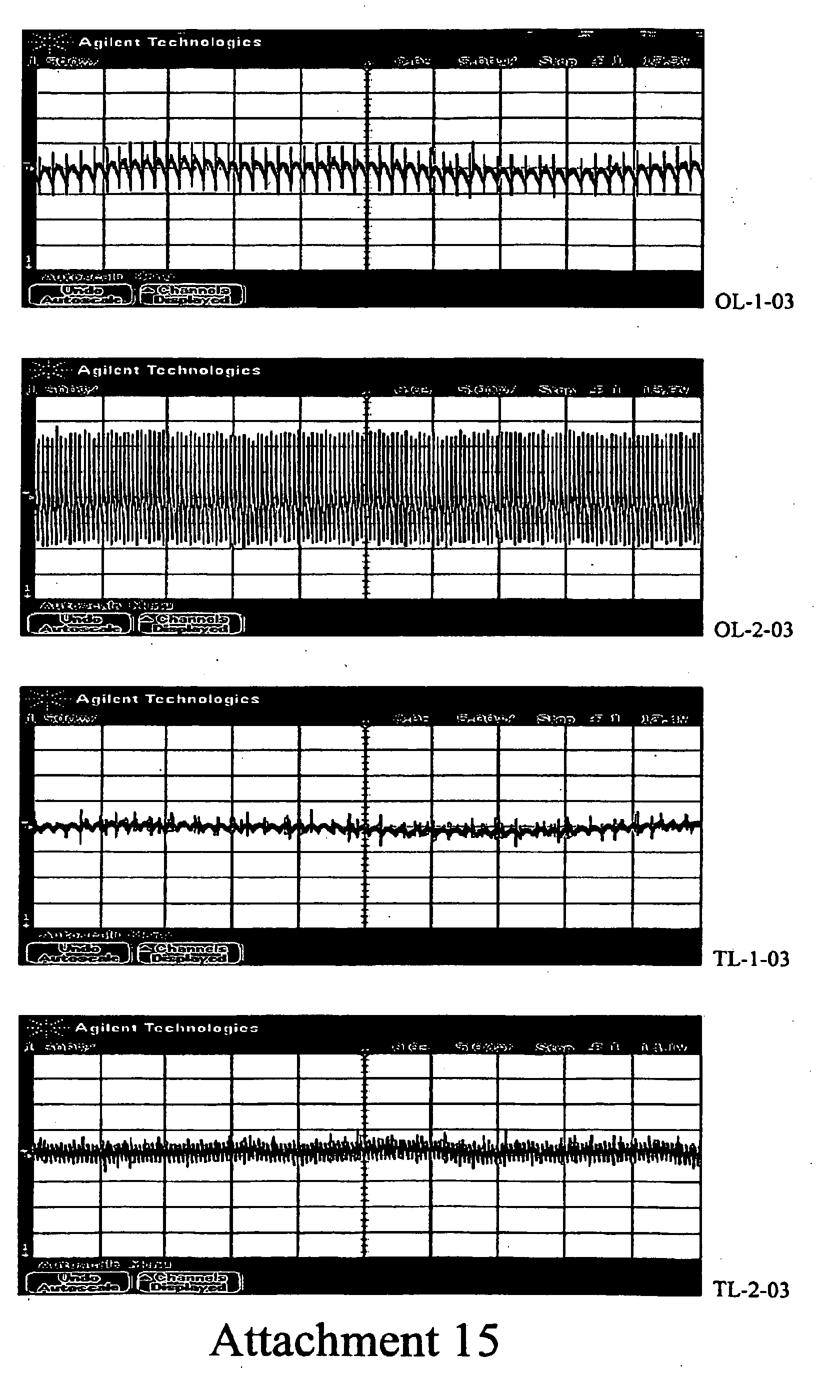

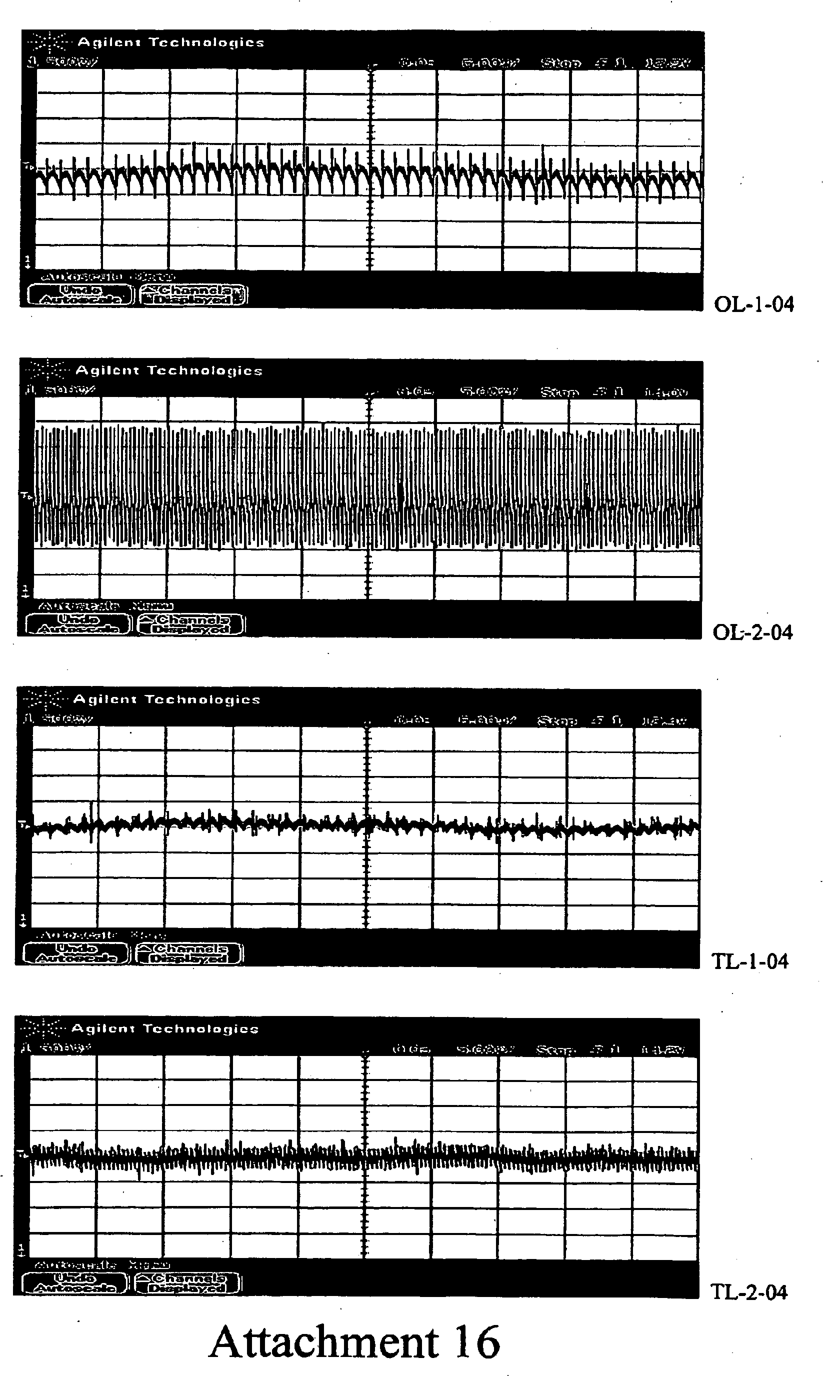

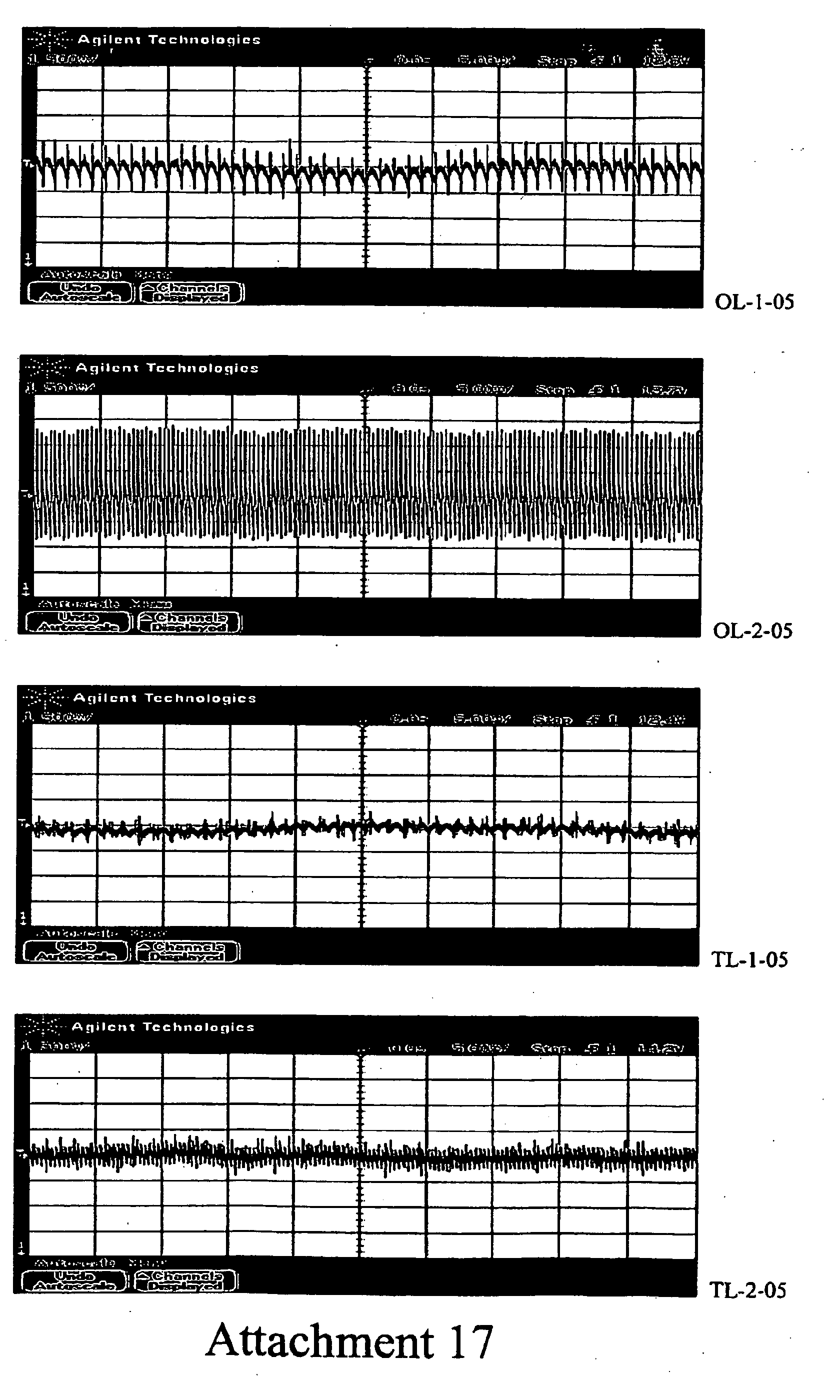

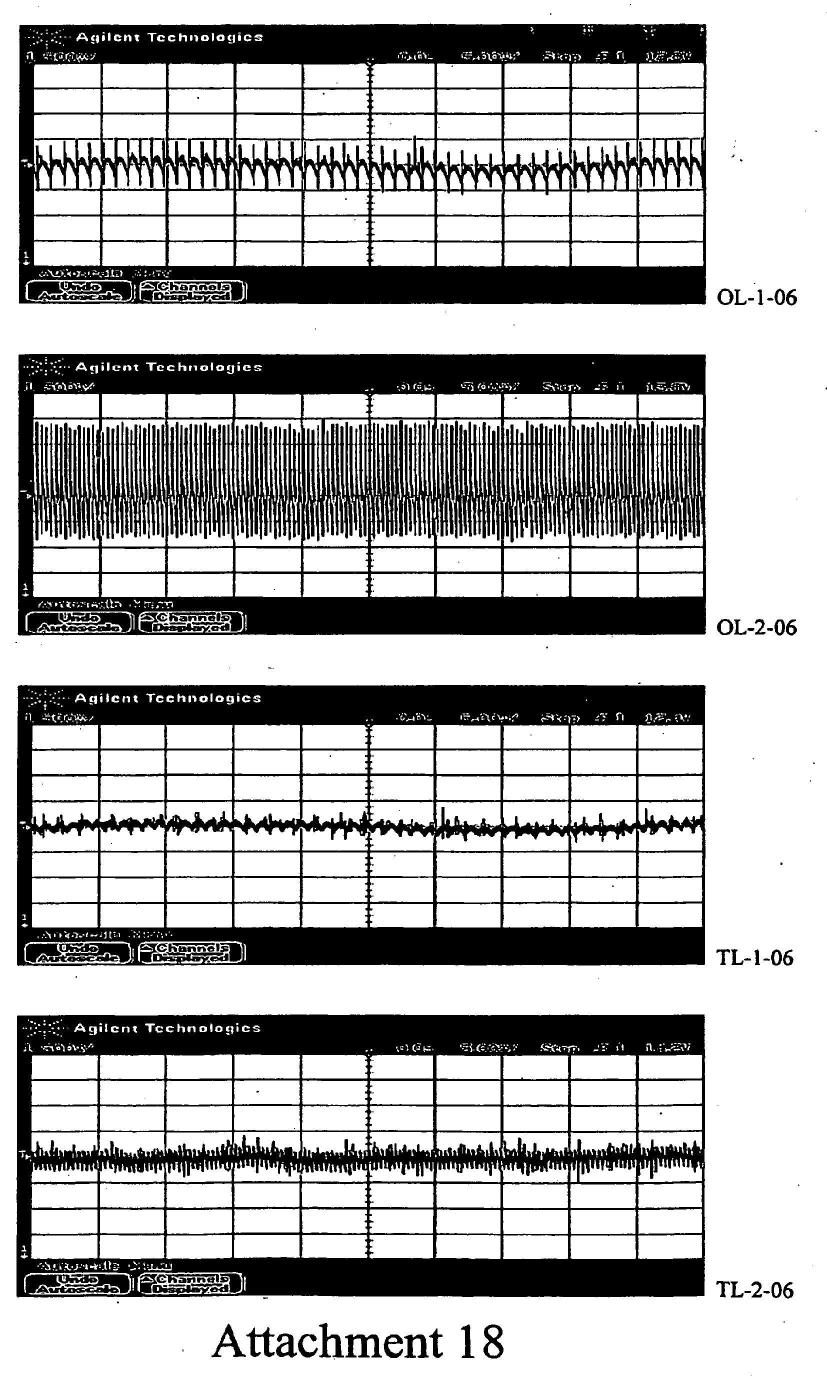

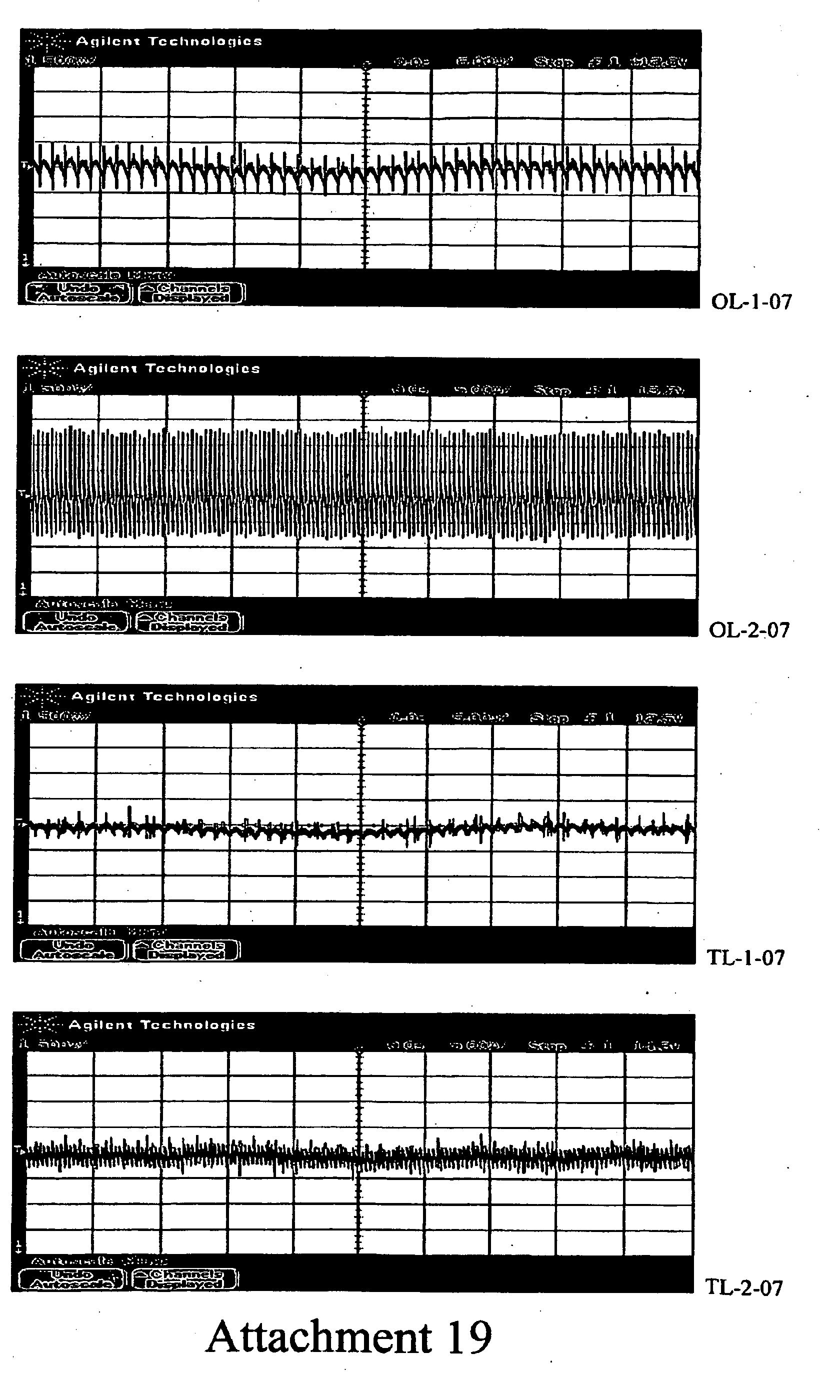

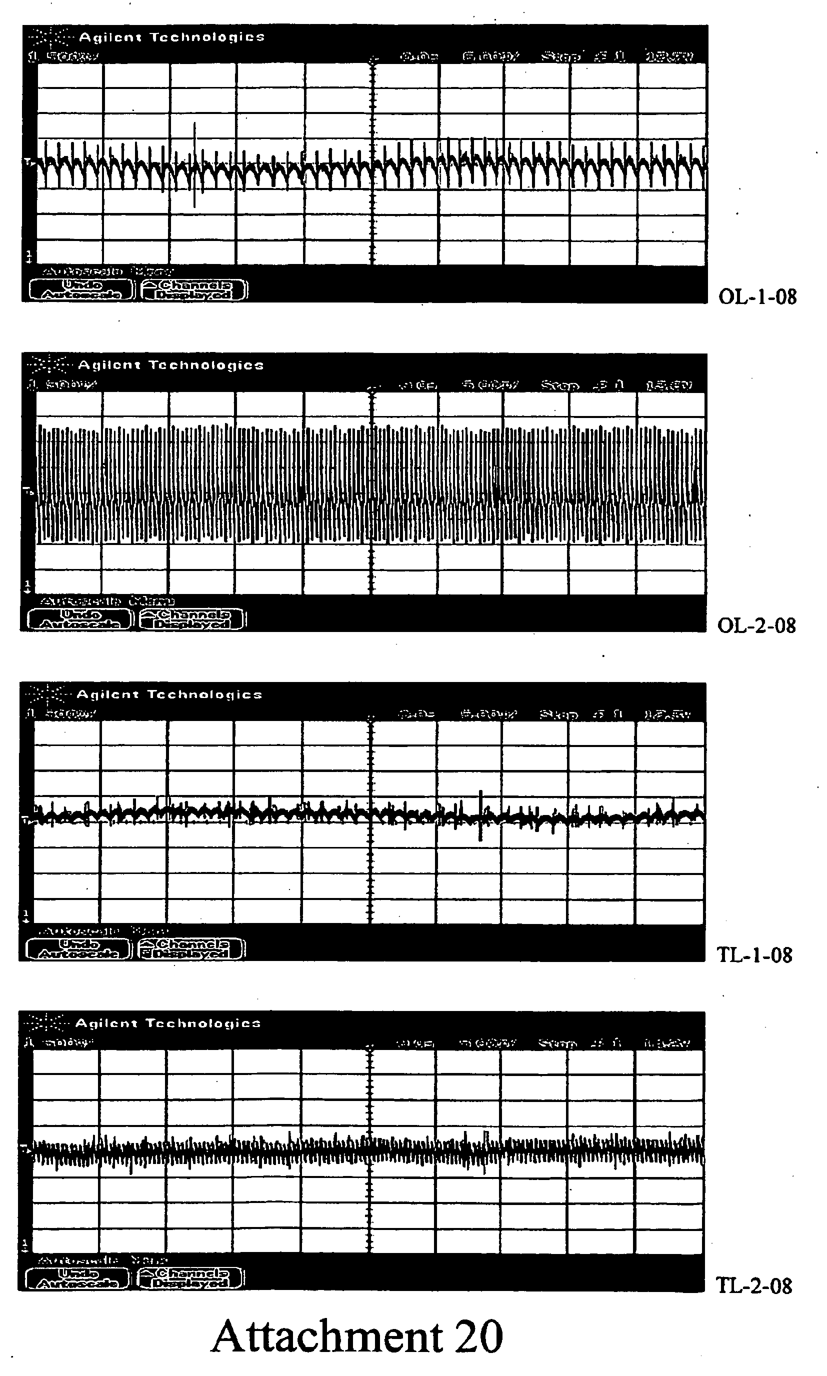

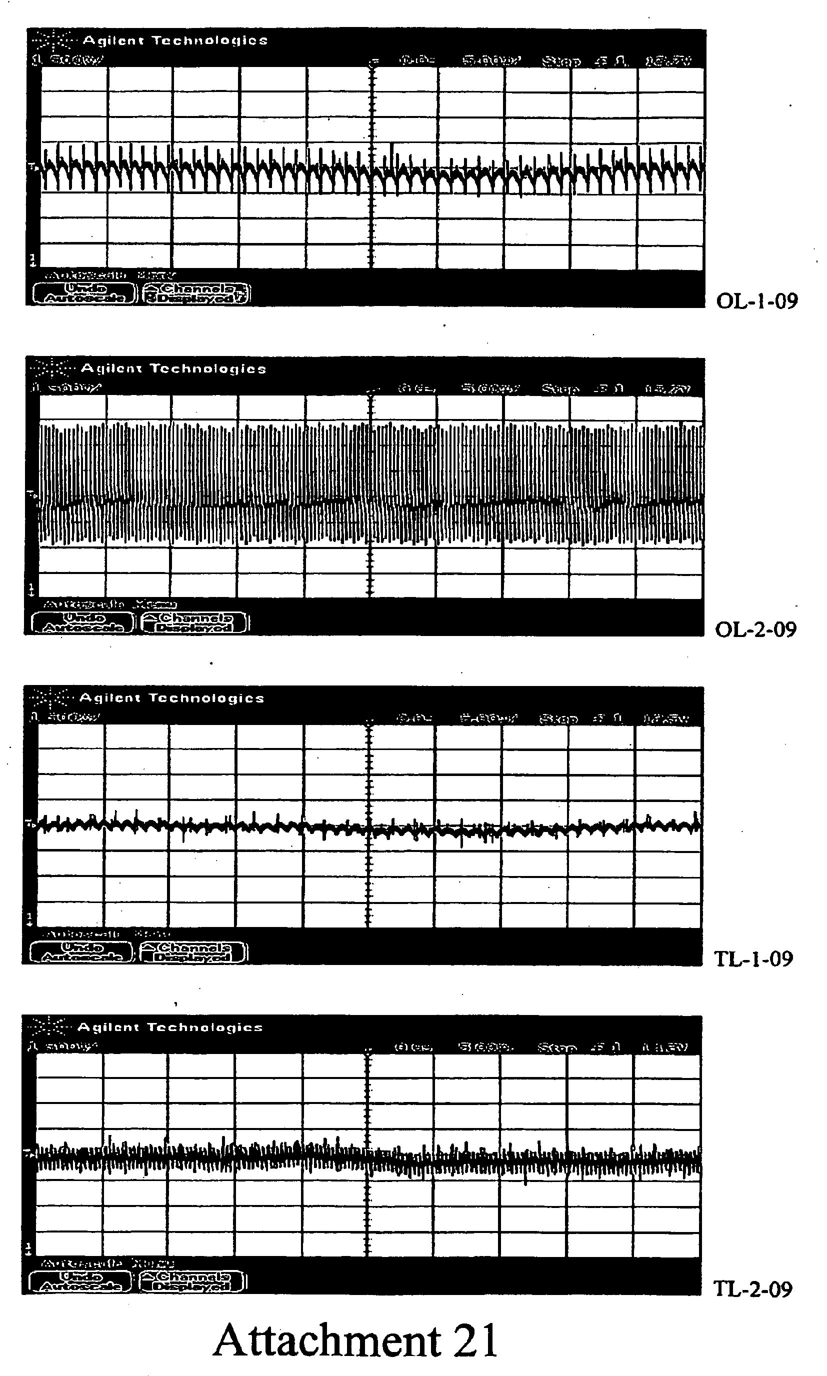

## Claims

1. A voltage stabilizing and surge preventing vehicle grounding system being laid in an engine chamber (4) interconnecting negative terminals of a vehicle generator (41), a gear shift controller (42), a engine cover (43), a battery unit (44), a starting motor (45), an antistick brake motor (46), a vehicle computer (47), a throttle valve (48), a dash board (49), a compressor (50), a relay assembly (51) to a grounding terminal (52) of a chassis so as to form a closed loop grounding wire;
wherein the closed loop grounding wire is connected with:
a surge absorber (1) having an accommodation cavity (12) enclosed by a housing (11) formed of two sections, an electrical circuit board (13) contained therein having a positive conductor (14) and a negative conductor (15) emerged out of said housing (11) to form a circuit with a resistor (16), a fuse element (17), an indication lamp (18), and a plurality of capacitors (19); and
a surge suppresser (2) having an accommodation cavity (22) enclosed by an environmental protective heat resistive plastic housing (21) filled with an insulated environmental protective material (23), and a plurality of successively arrayed annular magnetic hollow cores (241) with an insulation electrical conductor (25) wound around and passing through a channel formed by the hollow cores (241) to extend out of two ends of said surge suppresser (2) thereby forming a first conductor (26) and a second conductor ( 27); and wherein the closed loop grounding wire is provided with nine nodes (31, 32, 33, 34, 35, 36, 37, 38, 39), so as to be multi-tapped.

2. The grounding system as in claim 1, wherein the negative conductor (15) of said surge absorber (1) is connected to the negative terminal of said vehicle generator (41) with a conductor, while a positive terminal of said vehicle generator (41) is connected to the first conductor (26) of said surge suppresser (2) and a positive pole of said battery unit (44) with a conductor, while the second conductor (27) of said surge suppresser (2) is connected to the positive terminal of said vehicle generator (41), said multi-tapped closed loop grounding wire being connected to the negative terminal of said vehicle generator (41) and a negative pole of said battery unit (44) using at least two conductors (3).

3. The grounding system as in claim 1, wherein said closed loop grounding wire is connected to the negative terminal of said gear shift controller (42) with a conductor (3) from its first node (31).

4. The grounding system as in claim 1, wherein said closed loop grounding wire is connected to a first grounding terminal (52) of said chassis with a conductor (3) from its second node (32).

5. The grounding system as in claim 1, wherein said closed loop grounding wire is connected to said engine cover (43) with a conductor (3) from its third node (33).

6. The grounding system as in claim 1, wherein said closed loop grounding wire is connected to a second grounding terminal (52) of said chassis with a conductor (3) from its fourth node (34).

7. The grounding system as in claim 1, wherein said closed loop grounding wire is connected to a third grounding terminal (52) of said chassis with a conductor (3) form its fifth node (35).

8. The grounding system as in claim 1, wherein said closed loop grounding wire is connected to the negative terminals of said antistick brake motor (46) and said starting motor (45) with a conductor (3) form its sixth node (36).

9. The grounding system as in claim 1, wherein said closed loop grounding wire is connected to the negative terminals of said vehicle computer (47) and said dash board (49) with a conductors (3) form its seventh node (37).

10. The grounding system as in claim 1, wherein said closed loop grounding wire is connected to the negative terminal of said throttle valve (48) and to a fourth grounding terminal (52) of said chassis with a conductor (3) from its eighth node (38).

11. The grounding system as in claim 1, wherein said closed loop grounding wire is connected to the negative terminals of said compressor (50) and said relay assembly (51), and to a fifth grounding terminal (52) of said chassis with a conductor (3) from its ninth node (39).

## Patentansprüche

1. Spannungsstabilisierungs- und Überspannungsschutz-Fahrzeugerdungssystem, das in einem Motorraum (4) verlegt ist und das negative Pole eines Fahrzeuggenerators (41), einer Gangschaltungssteuerung (42), einer Motorabdeckung (43), einer Batterieeinheit (44), eines Anlassers (45), eines Antiblockiersystems (46), eines Fahrzeugcomputers (47), eines Drosselventils (48), einer Instrumententafel (49), eines Kompressors (50), einer Relaisanordnung (51) mit einem Erdungspol (52) eines Chassis verbindet, so dass ein eine geschlossene Schleife bildender Erdungsdraht ausgebildet ist,
wobei der eine geschlossene Schleife bildende Erdungsdraht verbunden ist mit:
einer Spannungssicherung (1), die einen Aufnahmehohlraum (12), der von einem zwei Sektionen ausbildenden Gehäuse (11) umgeben ist, aufweist, wobei eine darin enthaltene Elektroleiterplatte (13), die eine positive Leitung (14) und eine negative Leitung (15) aufweist, die aus dem Gehäuse (11) austreten zum Ausbilden eines Schaltkreises mit einem Widerstand (16), einem Schmelzleiter (17), einer Anzeigelampe (18) und einer Mehrzahl von Kondensatoren (19), und
einem Überspannungsschutz (2), der einen Aufnahmehohlraum (22), der von einem Umgebungsschutz-Wärmebeständigen-Kunststoffgehäuse (21) umgeben ist, das mit einem isolierenden Umgebungsschutz-Material (23) gefüllt ist, und eine Mehrzahl von aufeinanderfolgend gruppierten, ringförmigen magnetischen Hohlkernen (241) aufweist, um die eine elektrisch isolierte Leitung (25) herumgewickelt ist und durch einen von den Hohlkernen (241) ausgebildeten Kanal hindurch verläuft, um an zwei Enden des Überspannungsschutzes (2) herauszustehen, so dass eine erste Leitung (26) und eine zweite Leitung (27) ausgebildet sind, wobei der eine geschlossene Schleife bildende Erdungsdraht mit neun Knoten (31, 32, 33, 34, 35, 36, 37, 38, 39) zur Mehrfachanzapfung versehen ist.

2. Erdungssystem nach Anspruch 1, wobei die negative Leitung (15) der Spannungssicherung (1) mit dem negativen Pol des Fahrzeuggenerators (41) mit einer Leitung verbunden ist, wobei ein positiver Pol des Fahrzeuggenerators (41) mit der ersten Leitung (26) des Überspannungsschutzes (2) und mit einem positiven Pol der Batterieeinheit (44) mit einer Leitung verbunden ist, wobei die zweite Leitung (27) des Überspannungsschutzes (2) mit dem positiven Pol des Fahrzeuggenerators (41) verbunden ist, wobei der mehrfachanzapfbare, eine geschlossene Schleife bildende Erdungsdraht mit dem negativen Pol des Fahrzeuggenerators (41) und mit einem negativen Pol der Batterieeinheit (44) unter Verwendung von mindestens zwei Leitungen (3) verbunden ist.

3. Erdungssystem nach Anspruch 1, wobei der eine geschlossene Schleife bildende Erdungsdraht mit dem negativen Pol der Gangschaltungssteuerung (42) mit einer Leitung (3) von seinem ersten Knoten (31) aus verbunden ist.

4. Erdungssystem nach Anspruch 1, wobei der eine geschlossene Schleife bildende Erdungsdraht mit einem ersten Erdungspol (52) des Chassis mit einer Leitung (3) von seinem zweiten Knoten (32) aus verbunden ist.

5. Erdungssystem nach Anspruch 1, wobei der eine geschlossene Schleife bildende Erdungsdraht mit der Motorabdeckung (43) mit einer Leitung (3) von seinem dritten Knoten (33) aus verbunden ist.

6. Erdungssystem nach Anspruch 1, wobei der eine geschlossene Schleife bildende Erdungsdraht mit einem zweiten Erdungspol (52) des Chassis mit einer Leitung (3) von seinem vierten Knoten (34) aus verbunden ist.

7. Erdungssystem nach Anspruch 1, wobei der eine geschlossene Schleife bildende Erdungsdraht mit einem dritten Erdungspol (52) des Chassis mit einer Leitung (3) von seinem fünften Knoten (35) aus verbunden ist.

8. Erdungssystem nach Anspruch 1, wobei der eine geschlossene Schleife bildende Erdungsdraht mit den negativen Polen des Antiblockiersystems (46) und des Anlassers (45) mit einer Leitung (3) von seinem sechsten Knoten (36) aus verbunden ist.

9. Erdungssystem nach Anspruch 1, wobei der eine geschlossene Schleife bildende Erdungsdraht mit den negativen Polen des Fahrzeugcomputers (47) und des Instrumentenbrettes (49) mit einer Leitung (3) von seinem siebten Knoten (37) aus verbunden ist.

10. Erdungssystem nach Anspruch 1, wobei der eine geschlossene Schleife bildende Erdungsdraht mit dem negativen Pol des Drosselventils (48) und mit einem vierten Erdungspol (52) des Chassis mit einer Leitung (3) von seinem achten Knoten (38) aus verbunden ist.

11. Erdungssystem nach Anspruch 1, wobei der eine geschlossene Schleife bildende Erdungsdraht mit den negativen Polen des Kompressors (50) und der Relaisanordnung (51) und mit einem fünften Erdungspol (52) des Chassis mit einer Leitung (3) von seinem neunten Knoten (39) aus verbunden ist.

## Revendications

1. Système de mise à la terre d'un véhicule destiné à stabiliser la tension et à empêcher la surtension, installé dans une chambre de moteur (4) interconnectant les bornes négatives d'un générateur de véhicule (41), un dispositif de commande de changement de vitesse (42), un couvercle de moteur (43), une batterie (44), un moteur de démarrage (45), un moteur de frein anti-adhésif (46), un ordinateur de véhicule (47), un papillon des gaz (48), un tableau de bord (49), un compresseur (50), un ensemble de relais (51) à une borne de mise à la terre (52) d'un châssis de façon à former un fil de mise à la terre en boucle fermée ;
dans lequel le fil de mise à la terre en boucle fermée est connecté :
à un absorbeur de surtension (1) ayant une cavité de logement (12) entourée d'un boîtier (11) composé de deux sections, une planche de circuit électrique (13) contenue dans celui-ci ayant un conducteur positif (14) et un conducteur négatif (15) émergeant dudit boîtier (11) pour former un circuit avec une résistance (16), un élément de fusible (17), une lampe témoin (18) et une pluralité de condensateurs (19) ; et
un éliminateur de surtension (2) ayant une cavité de logement (22) entourée d'un boîtier, en plastique résistant à la chaleur, de protection de l'environnement (21) rempli des matériaux de protection de l'environnement isolés (23), une pluralité de noyaux creux magnétiques annulaires en rangées successives (241) avec un conducteur électrique d'isolation (25) enroulé autour et passant à travers un canal formé par les noyaux creux (241) pour s'étendre à l'extérieur de deux extrémités dudit éliminateur de surtension (2) en formant ainsi un premier conducteur (26) et un second conducteur (27) ;
et dans lequel le fil de mise à la terre en boucle fermée est muni de neuf noeuds (31, 32, 33, 34, 35, 36, 37, 38, 39) de façon à être à prises multiples.

2. Système de mise à la terre selon la revendication 1, dans lequel le conducteur négatif (15) dudit absorbeur de surtension (1) est connecté à la borne négative dudit générateur de véhicule (41) avec un conducteur, alors qu'une bande positive dudit générateur de véhicule (41) est connectée au premier conducteur (26) dudit éliminateur de surtension (2) et un pôle positif de ladite batterie (44) avec un conducteur, alors que le second conducteur (27) dudit éliminateur de surtension (2) est connecté à la borne positive dudit générateur de véhicule (41), ledit fil de mise à la terre en boucle fermée à branchement multiple étant connecté à la borne négative dudit générateur de véhicule (41) et un pôle négatif de ladite batterie (44) utilisant au moins deux conducteurs (3).

3. Système de mise à la terre selon la revendication 1, dans lequel ledit fil de mise à la terre en boucle fermée est connecté à la borne négative dudit dispositif de commande de changement de vitesse (42) par un conducteur (3) à partir de son premier noeud (31).

4. Système de mise à la terre selon la revendication 1, dans lequel ledit fil de mise à la terre en boucle fermée est connecté à une première borne de mise à la terre (52) dudit châssis par un conducteur (3) à partir de son deuxième noeud (32).

5. Système de mise à la terre selon la revendication 1, dans lequel ledit fil de mise à la terre en boucle fermée est connecté audit couvercle de moteur (43) par un conducteur (3) à partir de son troisième noeud (33).

6. Système de mise à la terre selon la revendication 1, dans lequel ledit fil de mise à la terre en boucle fermée est connecté à une seconde borne de mise à la terre (52) dudit châssis par un conducteur (3) à partir de son quatrième noeud (34).

7. Système de mise à la terre selon la revendication 1, dans lequel ledit fil de mise à la terre en boucle fermée est connecté à une troisième borne de mise à la terre (52) dudit châssis par un conducteur (3) à partir de son cinquième noeud (35).

8. Système de mise à la terre selon la revendication 1, dans lequel ledit fil de mise à la terre en boucle fermée est connecté aux bornes négatives dudit moteur de frein anti-adhésif (46) et dudit moteur de démarrage (45) par un conducteur (3) à partir de son sixième noeud (36).

9. Système de mise à la terre selon la revendication 1, dans lequel ledit fil de mise à la terre en boucle fermée est connecté aux bornes négatives dudit ordinateur de véhicule (47) et audit tableau de bord (49) par un conducteur (3) à partir de son septième noeud (37).

10. Système de mise à la terre selon la revendication 1, dans lequel ledit fil de mise à la terre en boucle fermée est connecté à la borne négative dudit papillon des gaz (48) et à une quatrième borne de mise à la terre (52) dudit châssis par un conducteur (3) à partir de son huitième noeud (38).

11. Système de mise à la terre selon la revendication 1, dans lequel ledit fil de mise à la terre en boucle fermée est connecté aux bornes négatives dudit compresseur (50) et ledit ensemble de relais (51), et à une cinquième borne de mise à la terre (52) dudit châssis par un conducteur (3) à partir de son neuvième noeud (39).
